# EUROPÄISCHE PATENTANMELDUNG

(11) **EP 2 224 213 A2**
(43) Veröffentlichungstag der Anmeldung: **01.09.2010**
(21) Anmeldenummer: 10154209.0
(22) Anmeldetag: 22.02.2010
(51) Int. Cl.: G01C 21/36

(54) **Navigationseinrichtung und Verfahren mit kontextsensitiver Direktwahl von Informationsobjekten**

(30) Priorität: 26.02.2009 DE 102009010380; 10.11.2009 DE 102009052628
(71) Anmelder: Navigon AG, 20251 Hamburg (DE)
(72) Erfinder: Mühlfelder, Mathias, 97082, Würzburg (DE)
(74) Vertreter: von den Steinen, Axel

(57) **Zusammenfassung**

Die Erfindung betrifft ein Verfahren zum Betrieb einer Navigationseinrichtung mit Prozcssorcinhcit, Positionscrmittlungscinhcit, Kartcndatcnbank sowie mit einem berührungssensitiven Ausgabebildschirm, wobei in der Kartendatenbank Informationsobjekte (2) enthalten sind, die zusammen mit einer Kartendarstellung (1) auf dem Ausgabebildschirm darstellbar sind. Die Erfindung betrifft ferner ein zugehöriges Computerprogrammprodukt sowie ein digitales Speichermedium und eine entsprechende Navigationseinrichtung.

Die Erfindung zeichnet sich dadurch aus, dass bei einer Berührung des Ausgabebildschirms innerhalb eines vorgebbaren Distanzbereichs (3) zwischen dem Berührungsmittelpunkt und zumindest einem Informationsobjekt (2) eine Auswahl des zumindest einen Informationsobjekts (2) erfolgt und zumindest eine vordefinierte Aktion ausgeführt wird. Dabei wird die vordefinierte Aktion in Abhängigkeit zumindest einer Eigenschaft des zumindest einen Informationsobjekts (2) automatisch aus einer Menge von Aktionen ausgewählt.

Durch die Erfindung wird die Möglichkeit geschaffen, in der Kartenansicht eines Navigationsgeräts enthaltene bzw. dargestellte Objekte auf einfachste Weise anzuwählen, um kontextsensitiv mit minimalem Aufwand Aktionen mit dem jeweils ausgewählten Objekt auszuführen.

## Beschreibung

Die Erfindung betrifft ein Verfahren zum Betrieb einer Navigationseinrichtung mit einem berührungssensitiven Bildschirm, sowie eine entsprechende Navigationseinrichtung. Die Erfindung betrifft ferner ein zugehöriges Computerprogrammprodukt sowie ein digitales Speichermedium.

Gattungsgemäße Verfahren und Navigationsseinsrichtungen mit einem berührungssensitiven Bildschirm, beispielsweise zur manuellen Auswahl von Menüelementen oder anderen auf dem Bildschirm dargestellten Objekten, sind aus dem Stand der Technik bekannt.

Bei den aus dem Stand der Technik bekannten, gattungsgemäßen Navigationsverfahren und -einrichtungen wird ein für den Nutzer relevantes Objekt auf der Karte, bei dem es sich insbesondere nicht um ein Menüelement oder einen Button handeln kann, vom Nutzer typischerweise ausgewählt, indem die Kartenansicht zunächst in einen Auswahlmodus versetzt wird, wozu die Kartenansicht zudem mit einem Fadenkreuz überlagert wird. Anschließend wird durch den Nutzer die unter dem Fadenkreuz liegende Karte so lange verschoben, bis das zu wählende Objekt (beispielsweise ein Straßensegment) unter dem Fadenkreuz erscheint und es der Nutzer durch eine Bestätigung auswählen kann. Eine weitere Möglichkeit zur Auswahl eines Objekts auf der Karte liegt darin, dem Nutzer auf dem Bildschirm das Bild beispielsweise einer Stecknadel zur Verfügung zu stellen, welches der Nutzer mit dem Finger auf der Karte verschieben und auf diese Weise ein Objekt auf der Karte auswählen kann.

Bei diesen bekannten Ansätzen für die Objektauswahl muss jedoch stets zunächst die Karte in einen Auswahlmodus versetzt, danach ein Objekt auf der Karte selektiv ausgewählt und die Auswahl vom Nutzer zudem bestätigt werden, wonach durch Bestätigen des gewählten Objekts dem Nutzer weitere Optionen angezeigt werden. Aus den angezeigten Optionen muss der Nutzer sodann auswählen, um so eine weitere Aktion in Bezug auf das gewählte Objekt einzuleiten. Die beiden genannten Auswahlmethoden aus dem Stand der Technik sind ferner zumeist darauf beschränkt, dass die zugehörige Straßenkarte in der 2D-Ansicht, und dabei vorzugsweise in der genordeten 2D-Ansicht, zur Verfügung steht und angezeigt wird.

Ein wesentlicher Nachteil der genannten Ansätze zur Auswahl von Objekten auf einem Navigationsbildschirm liegt in den erheblichen Schwierigkeiten der Auswahl eines Objekts auf der Karte während der Fahrt sowie der Weiterverarbeitung des ausgewählten Objekts mittels weiterer Aktionen, die für das jeweilige Objekt geeignet sind. Häufig sind zur Auswahl von Objekten zunächst Wechsel in geeignete Eingabemasken auf dem Bildschirm erforderlich. In jedem Fall erforderlich ist jedoch die akkurate Auswahl eines Objekts auf dem Bildschirm, was während der Fahrt fast unmöglich ist bzw. aufgrund der erforderlichen Konzentration auf den Bildschirm zu Gefährdungen bei der Fahrsicherheit führen kann.

Falls bei der Auswahl des gewünschten Objekts mittels Fadenkreuz oder Pin nicht genau der anvisierte Punkt getroffen wird, so erfolgt zudem keine ordnungsgemäße Anwahl des Objekts, und es ist somit keine weitere Verarbeitung oder Aktion mit dem vermeintlich gewählten Objekt möglich.

Doch selbst wenn das Objekt ordnungsgemäß ausgewählt wurde, so sind bis zur Ausführung der für das ausgewählte Objekt selektiv geeigneten Aktionen zumeist eine Anzahl weiterer Eingabemasken bzw. weitere Betätigungsschritte zu durchlaufen. All dies kann für den Nutzer aufwändig oder verwirrend sein, so dass die einfache Auswahl und Weiterverarbeitung von auf der Straßenkarte dargestellten Objekten für zahlreiche Nutzer mit der derzeitigen Technik oft nicht möglich ist und daher häufig unterbleibt.

Mit diesem Hintergrund ist es somit Aufgabe der vorliegenden Erfindung, ein Verfahren zum Betrieb einer Navigationseinrichtung mit berührungssensitivem Bildschirm bzw. eine entsprechende Navigationseinrichtung zu schaffen, mit dem bzw. mit der die im Stand der Technik vorhandenen Nachteile überwunden werden können. Insbesondere soll es die Erfindung ermöglichen, Objekte in einer Kartenansicht eines Navigationsgeräts auf einfache, intuitive Weise auszuwählen, ohne dabei die laufende Navigation zu unterbrechen und ohne vorab in spezielle Navigations- oder Auswahlmodi wechseln zu müssen, um bestimmte Aktionen mit auf der Karte ausgewählten Objekten auszuführen. Darüber hinaus soll die Möglichkeit geschaffen werden, mit den ausgewählten Objekten Aktionen unmittelbar kontextsensitiv auf Basis des gewählten Objekts und/oder auf Basis des Karteninhalts durchzuführen. Dem Nutzer sollen nach der Auswahl eines Objekts möglichst nur noch für das jeweils ausgewählte Objekt sinnvolle Aktionen zur Auswahl gestellt werden, die im jeweiligen Auswahlkontext notwendig und verwendbar sind.

Diese Aufgabe wird durch ein Verfahren gemäß Patentanspruch 1 gelöst. Die erfindungsgemäße Lösung der Aufgabe umfasst ferner eine Navigationseinrichtung gemäß Patentanspruch 16, ein Computerprogrammprodukt gemäß Patentanspruch 14 sowie ein digitales, computerlesbares Speichermedium nach Patentanspruch 15.

Bevorzugte Ausführungsformen der Erfindung sind Gegenstand der Unteransprüche.

Das erfindungsgemäße Verfahren dient in für sich genommen zunächst bekannter Weise zum Betrieb einer Navigationseinrichtung, wobei die Navigationseinrichtung eine Prozessoreinheit, eine Positionsermittlungseinheit, eine Massenspeichereinheit mit Kartendatenbank sowie einen berührungssensitiven Ausgabebildschirm umfasst. Dabei sind in der Kartendatenbank oder in der Massenspeichereinheit Informationsobjekte enthalten und können zusammen mit einer Kartendarstellung auf dem Ausgabebildschirm dargestellt werden. Bei den Informationsobjekten kann es sich beispielsweise um Ortschaften, Points of Interest, Adressbucheinträge, Favoriten, Warnhinweise, Verkehrsmeldungen, Straßensegmente, 3D-Elemente oder allgemein um Kartenelemente oder -Polygone handeln, wobei die einzelnen Informationsobjekte zur erleichterten Handhabung und Kategorisierung im Allgemeinen in Objektklassen wie z.B. die soeben genannten eingeteilt werden.

Erfindungsgemäß jedoch zeichnet sich das Verfahren dadurch aus, dass bei einer Berührung des Ausgabebildschirms innerhalb eines vorgebbaren Distanzbereichs zwischen dem Berührungsmittelpunkt und zumindest einem Informationsobjekt unmittelbar eine Auswahl des zumindest einen Informationsobjekts erfolgt. Zusätzlich wird infolge der Auswahl des zumindest einen Informationsobjekts unmittelbar eine vordefinierte Aktion ausgeführt, wobei die vordefinierte Aktion in Abhängigkeit zumindest einer Eigenschaft des zumindest einen Informationsobjekts oder einer dem Informationsobjekt zugeordneten Objektklasse automatisch aus einer Menge von Aktionen ausgewählt wird.

Der Begriff "vorgebbarer Distanzbereich" soll dabei weit ausgelegt werden und für eine beliebige Definition einer zulässigen Entfernung zwischen dem Berührungsmittelpunkt und dem dargestellten Informationsobjekt stehen. Insbesondere soll der Distanzbereich zunächst nicht etwa auf eine runde Form beschränkt sein, sondern eine im Wesentlichen beliebige - zur Detektion von Berührungen in der Nähe des Informationsobjekts sinnvolle - Formgebung aufweisen können. Ebenso können unterschiedliche Ausgangspunkte zur Definition und Abgrenzung des Distanzbereichs, innerhalb dessen eine Berührung des Bildschirms einem zugehörigen Informationsobjekt zugeordnet wird, herangezogen werden. So kann der Distanzbereich beispielsweise ausgehend von einem Mittelpunkt oder Flächenschwerpunkt der Darstellung eines Informationsobjekts auf dem Bildschirm definiert sein, oder der Distanzbereich kann in Bezug auf die Ränder der Darstellung eines Informationsobjekts oder Icons auf dem Bildschirm definiert sein. Ebenso kann der Distanzbereich auch ausgehend von einer Mittellinie oder Begrenzungslinie beispielsweise eines linienförmigen oder langgestreckten Informationsobjekts - wie zum Beispiel einer Straße, einer Fläche oder eines Polygons auf der Straßenkarte - definiert sein. Der Distanzbereich kann schließlich auch durch Projektion einer zunächst im Wesentlichen beliebig geformten (zur Aktivierung eines Informationsobjekts zulässigen) Berührungsfläche aus der Bildschirmebene in die Kartenebene definiert sein.

Durch die Erfindung wird somit die Möglichkeit geschaffen, in der Kartenansicht eines Navigationsgeräts enthaltene bzw. dargestellte Objekte auf einfache Weise auszuwählen, um so mit geringstmöglichem Aufwand bestimmte Aktionen mit den jeweils ausgewählten Objekten auszuführen. Dank der Erfindung können beispielsweise während der Fahrt mit einem Navigationsgerät ohne Umwege durch eine einfache Berührung der Kartenansicht auf dem Bildschirm eines oder mehrere Objekte ausgewählt werden. Dieses Objekt oder eines der ausgewählten Objekte kann anschließend sofort für geeignete Aktionen genutzt werden, beispielsweise um das gewählte Objekt als Zwischenziel in eine Route einzufügen oder um das Navigationsgerät anzuweisen, dass ein auf der Karte als Warnobjekt signalisierter Stau umfahren werden soll. Aufgrund der Eigenschaft der Erfindung, infolge der Auswahl unmittelbar eine vordefinierbare Aktion ausführen zu können, die von den Eigenschaften des ausgewählten Objekts abhängig ist, können Aktionen unmittelbar kontextsensitiv in Bezug auf das gewählte Objekt und/oder kontextsensitiv in Bezug auf den aktuell angezeigten Inhalt der Karte ausgeführt werden. Dem Nutzer werden nach seiner Auswahl eines Objekts somit nur noch für das jeweils ausgewählte Objekt sinnvolle Aktionen zur Auswahl gestellt, anstelle dem Nutzer nach jeder Auswahl eines Objekts umfangreiche Aktionsmenüs einzublenden. Auf diese Weise verbessert sich die Lesbarkeit sowie die Geschwindigkeit der Betätigung bzw. der intuitiven Erfassung des Bildschirminhalts, und damit auch die Sicherheit und der Bedienkomfort des Navigationsgeräts.

Ein wesentlicher Vorteil der Erfindung aus Nutzersicht besteht somit darin, dass sich der Bedienkomfort aufgrund der einfachen und intuitiven Auswahl und Handhabung von Kartenobjekten erheblich steigern lässt. So kann der Nutzer beispielsweise während der Fahrt für ihn relevante Inhalte der Karte direkt erkennen und diese einfach mit einem Fingertipp anklicken. Demgegenüber musste der Nutzer im Stand der Technik bisher zumeist sehr genau das zu wählende Objekt in der Karte fokussieren, um anschließend weitere Aktionen mit dem gewählten Objekt ausführen zu können.

Im Unterschied hierzu erlaubt die Erfindung zunächst bereits eine gewisse manuelle Ungenauigkeit bei der Auswahl des gewünschten Kartenobjekts, da erfindungsgemäß grundsätzlich Objekte für die Auswahl in Betracht gezogen werden, die sich innerhalb des vorgebbaren Distanzbereichs um den Berührungsmittelpunkt befinden.

Der Distanzbereich bzw. Suchbereich um den Berührungsmittelpunkt, innerhalb dessen nach auszuwählenden Objekten gesucht wird, ist dabei variabel einstellbar. Die Erfindung erlaubt ferner auch die Auswahl von Objekten auf der Karte nicht nur in der 2D-Kartenansicht, sondern darüber hinaus in allen heute üblichen Kartenansichten, wie insbesondere 2D, 2.5D, 3D und Terrain View. Dank der Erfindung ist die vereinfachte Auswahl von Objekten in jeder Kartenansicht umsetzbar, die dem Nutzer bei der Fahrt oder der Nutzung eines Navigationsgerätes angezeigt werden kann.

Die Erfindung wird unabhängig davon verwirklicht, ob ein bei der Berührung des Bildschirms selektierbares Informationsobjekt auf dem Bildschirm aktuell tatsächlich dargestellt ist oder nicht. So ist es unter bestimmten Rahmenbedingungen möglich und ggf. auch sinnvoll, auch solche Informationsobjekte auswählen zu können, die zwar in der Kartendatenbank oder in der Massenspeichereinheit der Navigationseinrichtung gespeichert sind, momentan jedoch nicht angezeigt werden, beispielsweise aufgrund eines bestimmten Darstellungsmodus oder aufgrund eines bestimmten Darstellungsmaßstabs.

Gemäß einer bevorzugten Ausführungsform der Erfindung erfolgt bei einer Berührung des Ausgabebildschirms die Selektierung eines Informationsobjekts jedoch nur dann, wenn das entsprechende Informationsobjekt aktuell auf dem Bildschirm dargestellt ist. In den meisten Betriebszuständen einer Navigationseinrichtung verhindert dies eine Verwirrung des Nutzers dadurch, dass Objekte ausgewählt werden, die er auf der Karte nicht gesehen hat. So werden gemäß dieser Ausführungsform des erfindungsgemäßen Verfahrens beispielsweise nur solche Points of Interest ausgewählt und mögliche Aktionen diesbezüglich angezeigt, welche auch zum Zeitpunkt des Klicks in der Karte sichtbar waren; verborgene Points of Interest werden dem Nutzer (unabhängig davon, aus welchem Grund diese verborgen sind) nicht zur Auswahl angeboten. Ferner werden beispielsweise auch keine Straßensegmente als Objekte ausgewählt, wenn diese Straßensegmente auf der aktuell verwendeten Kartenansicht nicht sichtbar waren.

Gemäß einer weiteren, besonders bevorzugten Ausführungsform der Erfindung wird bei einer Berührung des Ausgabebildschirms dem Mittelpunkt der Fingerberührung auf dem Bildschirm zunächst eine Bildschirmkoordinate zugeordnet, und im Anschluss wird der Bildschirmkoordinate eine geographische Kartenkoordinate zugeordnet. Sodann wird um die geographische Kartenkoordinate ein geographisches Suchgebiet mit einer vorgebbaren Ausdehnung definiert, und es werden alle Informationsobjekte als Selektionskandidaten ermittelt, die sich innerhalb des geographischen Suchgebiets befinden.

Dies ist vorteilhaft insbesondere bei Schräg- bzw. 3D-Darstellung der Karte auf dem Bildschirm, da das Suchgebiet auf diese Weise nicht auf den Bildschirm projiziert wird und somit auf der Karte nicht eine Ellipse oder Keule mit evtl. unerwünscht großer Längsausdehnung bildet. Vielmehr kann das Suchgebiet auf diese Weise vertikal auf die Karte projiziert werden, mit entsprechend besserer Genauigkeit und Plausibilität der auszuwählenden Selektionskandidaten.

Das Suchgebiet kann dabei insbesondere durch einen Kreis mit einem vorgebbaren Radius gebildet sein. Gemäß einer weiteren Ausführungsform der Erfindung wird das Suchgebiet zumindest einmal automatisch vergrößert, falls bei einer ersten Suche innerhalb einer ersten Suchgebietsgröße keine Selektionskandidaten ermittelt werden konnten. Auf diese Weise kann der Nutzer verhältnismäßig nah beieinander liegende Kartenobjekte bzw. Selektionskandidaten voneinander trennen und sicher auswählen, es ist jedoch andererseits keine ebenso hohe Genauigkeit der Fingerberührung erforderlich, wenn einzeln stehende Kartenobjekte bzw. Selektionskandidaten ausgewählt werden sollen, da der fragliche Selektionskandidat in diesem Fall zumindest bei der zweiten Suche mit dem vergrößerten Suchgebiet aufgefunden und ausgewählt werden kann.

Eine weitere Ausführungsform des erfindungsgemäßen Verfahrens sieht vor, dass die nach einer Berührung des Bildschirms erfolgende vordefinierte Aktion die Anzeige einer Auswahlliste von Selektionskandidaten auf dem Bildschirm umfasst, falls mehrere Selektionskandidaten ermittelt wurden bzw. das Suchgebiet mehrere Selektionskandidaten enthält. Auf diese Weise kann der Nutzer aus der nach der Berührung angezeigten Auswahlliste schnell denjenigen Selektionskandidaten bzw. diejenige zugehörige Aktion auswählen, die dem von ihm gewünschten Selektionskandidaten bzw. Kartenobjekt entspricht. Bei der Erstellung der Auswahlliste kann dabei insbesondere eine Filterung und/oder Priorisierung der anzuzeigenden Selektionskandidaten nach unterschiedlichen Prioritätskriterien erfolgen.

Eine erste Filterung bzw. Priorisierung der Selektionskandidaten im Suchgebiet kann hierbei insbesondere danach erfolgen, ob die im Suchgebiet enthaltenen Selektionskandidaten aktuell auf dem Bildschirm dargestellt werden bzw. für den Nutzer sichtbar sind.

Damit wird einerseits verhindert, dass in der Auswahlliste eine für den Nutzer überraschend große und daher möglicherweise verwirrende Datenmenge angezeigt wird. Auch lässt sich damit beispielsweise in einer Terraindarstellung verhindern, dass hinter einer Erhebung liegende, momentan aber verdeckte Objekte ausgewählt oder mit hoher Priorität angezeigt werden. Da eine Bildschirmkoordinate insbesondere in 3D-Ansichten mit Terrain zu einer oftmals nicht eindeutigen geographischen Position führt, ist die Sichtbarkeit als Filterkriterium bei diesen Darstellungsformen besonders geeignet.

Gemäß einer weiteren, besonders bevorzugten Ausführungsform der Erfindung umfasst die vordefinierte Aktion für den Fall, dass eine Mehrzahl von Selektionskandidaten im Suchgebiet genau einen Selektionskandidaten umfasst, welcher eine Vorrangeigenschaft aufweist, die automatische Auswahl dieses Selektionskandidaten. Auf diese Weise lässt sich - auch im Fall einer Mehrzahl in Frage kommender Selektionskandidaten - sofort die für einen Selektionskandidaten mit Prioritätseigenschaft vorgesehene Aktion ausführen, ohne dass dem User zunächst eine Auswahlliste mit der Mehrzahl von Selektionskandidaten präsentiert werden muss.

Dabei kann bestimmten Objekten bzw. Objekt-Aktions-Kombinationen auch eine sogenannte Force-Priorität zugewiesen werden. Liegt in einer Liste von Selektionskandidaten in einem Suchgebiet einer bestimmten Koordinate ein Objekt vor, dem - ggf. abhängig vom aktuellen Benutzungskontext - Aktionen zugeordnet sind, die eine Force-Priorität aufweisen, dann wird auf keinen Fall eine Liste der Selektionsobjekte angezeigt. Vorzugsweise wird dabei auch keine Auswahl unterschiedlicher möglicher Aktionen für das die Force-Priorität aufweisende Objekt angezeigt, und es wird optional auch keine weitere Bestätigung durch den Benutzer angefordert.

Dies bedeutet mit anderen Worten, dass im Falle des Vorliegens eines Objekts mit Force-Priorität innerhalb des Suchgebiets einer vom User ausgewählten Koordinate unmittelbar und ohne weitere Auswahl oder Bestätigung die diesem Objekt zugewiesene Aktion oder Hauptaktion ausgeführt wird.

Eine Vorrangeigenschaft oder Force-Priorität kann dabei insbesondere auch vom aktuellen Benutzungskontext abhängig sein. So sollten z.B. TMC-Verkehrsmeldungen beispielsweise nur im Falle einer aktiven Routenplanung eine Vorrangeigenschaft bzw. Force-Priorität aufweisen. Denn die generelle, nicht vom Kontext abhängige Zuordnung einer Vorrangeigenschaft bzw. Force-Priorität beispielsweise zu Verkehrsmeldungen würde ansonsten die Zieleingabe mittels Bildschirmberührung stören, da die in der Nähe liegenden POIs oder Straßen in diesem Fall vom Nutzer nicht mehr ausgewählt werden könnten.

Mit dem Fall, dass mehrere Objekte mit Force-Priorität in demselben Suchgebiet enthalten sind, können zur ggf. automatischen Auswahl des Objekts mit höchster Priorität weitere Prioritäten definiert werden. Diese Prioritäten können beispielsweise abgeleitet werden von der Objektpriorität, von der Aktionspriorität und/oder von der Distanz des fraglichen Objekts zu der vom Nutzer ausgewählten Koordinate.

Sollte das Suchgebiet lediglich genau einen Selektionskandidaten umfassen, so erfolgt vorzugsweise die automatische Auswahl dieses Kandidaten.

Eine weitere Ausführungsform des erfindungsgemäßen Verfahrens sieht vor, dass die bei einer Berührung des Bildschirms erfolgende vordefinierte Aktion die Anzeige einer Auswahlliste von möglichen Nutzeraktionen auf dem Bildschirm umfasst, wobei die angezeigten, möglichen Nutzeraktionen dem selektierten Informationsobjekt abhängig von dessen Eigenschaften zugeordnet sind.

Dabei kann die Art der angezeigten bzw. auszuwählenden Aktionen prinzipiell beliebig sein. In Frage kommt zum Beispiel die Anzeige von Informationen zu dem selektierten Objekt, die Verwendung des selektierten Objekts als Ziel oder Zwischenziel bei einer Routenführung, die Umfahrung des selektierten Objekts, die Bearbeitung eines selektierten Objekts oder die Suche von weiteren Objekten im Umkreis.

Möglich ist auch die Anzeige bzw. Auswahl einer Aktionsfolge, d.h. die Aktivierung einer Mehrzahl an Aktionen, die parallel oder sequentiell in Bezug auf das selektierte Objekt abgearbeitet werden. So kann ein selektiertes Objekt, z.B. ein Point of Interest, als Navigationsziel verwendet werden. Parallel dazu kann über ein beispielsweise via Bluetooth angeschlossenes oder im Navigationsgerät bzw. in der Multimediaeinheit des Fahrzeugs vorhandenes Mobiltelefon die dem ausgewählten Point of Interest zugeordnete Telefonnummer hinterlegt werden, zusätzlich oder alternativ kann eine für den Point of Interest hinterlegte Website aufgerufen und/oder eine Buchung, z.B. für ein Hotel, ausgelöst werden. Die Aktionsfolge in Bezug auf ein selektiertes Objekt kann auch dergestalt ausgebildet sein, dass zunächst eine Aktion ausgeführt wird, z.B. Anzeige von Informationen über eine selektierte Verkehrsinformation, und anschließend die Auswahl einer möglichen Aktion wie "Umfahren".

Die Sortierung der Objekte in der Ausgabeliste für den Benutzer kann dabei einer vordefinierten Logik unterliegen. Zudem müssen nicht immer alle vorhandenen Objekte für den Nutzer sichtbar sein, auch wenn diese Objekte unter anderen Randbedingungen sichtbar gewesen wären. So kann beispielsweise ein Verkehrsstau als Informationsobjekt ausgeblendet werden, wenn sich dieser in der Gegenrichtung der aktuellen Fahrtrichtung des Nutzers befindet.

Eine weitere Ausführungsform des erfindungsgemäßen Verfahrens sieht vor, dass die vordefinierte Aktion bzw. die Bildschirmanzeige einer Auswahlliste von möglichen Nutzeraktionen dem selektierten Informationsobjekt abhängig von einem aktuellen Benutzungskontext zugeordnet ist. Auch auf diese Weise wird die Möglichkeit geschaffen, Aktionen kontextsensitiv nicht nur aufgrund von Eigenschaften des selektierten Objekts, sondern auch aufgrund von Kontexteigenschaften, insbesondere des Inhalts oder der Umgebung auf der Karte, auszuwählen. Ein Kontext für eine auszuführende Aktion oder darzustellende Bildschirmanzeige kann insbesondere auch in einem bestimmten Betriebsmodus der Navigationseinrichtung bestehen. So kann die nach einer Bildschirmberührung auszuführende Aktion oder darzubietende Bildschirmanzeige unterschiedlich in Abhängigkeit beispielsweise davon ausfallen, ob der aktuelle Betriebsmodus eine aktive Routenführung oder eine Zielsuche umfasst. Auch dies führt bei der automatischen Auswahl der vordefinierten Aktion bzw. bei der Darstellung eines Auswahlmenüs zu Vorteilen bezüglich der einfachen Interaktionsmöglichkeit mit dem selektierten Objekt.

Insbesondere werden auf diese Weise überflüssige, dem Benutzer zur Auswahl angebotene Texte oder Auswahlmöglichkeiten auf dem Bildschirm noch weiter reduziert. Stattdessen werden dem Benutzer nur noch sinnvolle Aktionen zur Auswahl gestellt, die im jeweiligen Karten- oder Benutzungskontext notwendig und verwendbar sind. Sollte dabei einem selektierten Informationsobjekt nur eine Aktion zugeordnet sein, so wird diese Aktion vorzugsweise automatisch ausgeführt, ohne eine weitere Anwahl oder Bestätigung durch den Nutzer zu erfordern.

Eine weitere Verfahrensvariante betrifft die Art der Bedienung des Touchscreens zum Auslösen einer Aktion. Neben der klassischen Benutzung des Touchscreens durch punktuelles Berühren des Bildschirms sind neue Technologien bekannt, die ebenfalls zur Bedienung eines Touchscreens vorgesehen sind. So ist nach einer bevorzugten Variante vorgesehen, dass bei Berührung des Ausgabebildschirms innerhalb des vorgegebenen Distanzbereichs zwischen dem Berührungsmittelpunkt und zumindest einem Informationsobjekt vordefinierte Bewegungsmuster, insbesondere Gesten, detektiert werden können. Aktionen können dann in Abhängigkeit zumindest einer Eigenschaft des Bewegungsmusters ausgewählt werden.

Dazu gehört in einer ersten Ausprägung Gestensteuerung. Durch bestimmte Bewegungen des Bedienelementes, vorzugsweise eines Fingers, auf dem Touchscreen werden auch bestimmte Aktionen ausgelöst. In Kombination mit dem erfinderischen Verfahren soll es damit auch möglich sein, dass eine Touchscreen-Geste auf der Kartendarstellung ausgeführt wird und damit eine Auswahl mindestens eines Informationsobjektes ausgeführt wird. Neben der Auswahl des Informationsobjektes auf dem Screen kann dieses ausgewählt werden. Durch die entsprechende Geste kann eine der kontextbezogenen Aktionen direkt ausgewählt werden, oder wenn mehrere Aktionen zur Verfügung stehen, können bestimmten Gesten bestimmte Aktionen zugeordnet werden.

Eine weitere Variation des erfindungsgemäßen Bedienkonzepts betrifft die sogenannte Proximity-Detektierung. Nach dieser Variante ist die Navigationseinrichtung mit einer Näherungssensorik ausgestattet ist, mit der die Annäherung eines Bedienelements an den Ausgabebildschirms detektiert werden kann. Nach Detektion der Annäherung eines Bedienelements können dann am Ausgabebildschirm veränderte Bildinhalte angezeigt werden. Wird beispielsweise über ein kapazitives Display oder durch andere Detekierungstechnologien ein Bedienelement bereits erkannt, bevor es den Touchscreen berührt, können bereits vor der eigentlichen Berührung des Touchscreens Aktionen ausgeführt werden. So kann bei Annäherung eines Bedienelements an den Touchscreen mit Proximity-Detektierung das erste Auswahlfenster für die Informationsobjekte in der Umgebung des detektierten Umgebungselementes angezeigt werden, und es wird wieder ausgeblendet, wenn das Bedienelement den detektierten Nahebereich wieder verlässt.

Weiterhin ist eine Kombination der Proximity-Detektierung mit Gesten möglich. So können Gesten durch das Bedienelement ausgeführt werden, die zu bestimmten kontextspezifischen Aktionen führen. So kann eine bestimmte Geste, wie eine Seitwärtsbewegung, nach der Anzeige des ersten Auswahlfensters für ein Informationsobjekt so interpretiert werden, dass das Auswahlfenster arretiert wird und nun durch eine weitere Proximity-Detektion aktive Elemente, wie Buttons oder Listenelemente, im Auswahlfenster selektiert werden. Eine weitere Geste kann als Auslöser für einen Button oder ein Listenelement, aber auch wie ein Click auf die Karte im Sinne des klassischen Touchscreens interpretiert werden.

Die Erfindung betrifft ferner ein dem erfindungsgemäßen Verfahren zugeordnetes Computerprogrammprodukt, ein zugehöriges digitales Speichermedium sowie eine ebenfalls erfindungsgemäße Navigationseinrichtung. Dabei umfasst das erfindungsgemäße Computerprogrammprodukt auf einem maschinenlesbaren Träger gespeicherte Programmschritte zur Durchführung des oben beschriebenen erfindungsgemäßen Verfahrens, wenn diese von einer programmierbaren Prozessoreinheit ausgeführt werden. Das digitale Speichermedium gemäß der Erfindung enthält elektronisch auslesbare Steuersignale, die nach dem Auslesen durch eine programmierbare Prozessoreinheit einer Navigationseinrichtung dergestalt mit der Prozessoreinheit interagieren können, dass durch die Prozessoreinheit das beschriebene, erfindungsgemäße Verfahren ausgeführt wird.

Die erfindungsgemäße Navigationseinrichtung schließlich dient der Erstellung und Handhabung einer geographischen Kartenansicht, und umfasst eine Prozessoreinheit, eine Positionsermittlungseinheit, eine Massenspeichereinheit mit Kartendatenbank sowie einen berührungssensitiven Ausgabebildschirm. Dabei können auf dem Ausgabebildschirm Informationsobjekte zusammen mit einer Kartendarstellung ausgegeben bzw. dargestellt werden. Bei den auf dem Bildschirm darstellbaren Informationsobjekten kann es sich insbesondere um Ortschaften, Points of Interest, Adressbucheinträge, Favoriten, Warnhinweise, Verkehrsmeldungen, Straßensegmente, 3D-Elemente oder allgemein um Kartenelemente handeln.

Die Prozessoreinheit der Navigationseinrichtung ist dabei zur Ausführung des oben beschriebenen Computerprogrammprodukts, zum Auslesen des genannten digitalen Speichermediums oder zur Durchführung des oben beschriebenen erfindungsgemäßen Verfahrens eingerichtet.

Im Folgenden wird die Erfindung anhand lediglich Ausführungsbeispiele darstellender Zeichnungen näher erläutert.

Dabei zeigt
- **Fig. 1**: eine erste Kartenansicht in 3D-Perspektive mit einer Na- vigationsroute sowie mit einer Anzahl an Informations- objekten, erzeugt durch ein Verfahren bzw. ausgegeben von einer Navigationseinrichtung gemäß einem Ausfüh- rungsbeispiel der Erfindung;
- **Fig. 2**: in einer **Fig. 1** entsprechenden Darstellung und Ansicht eine zweite Kartendarstellung mit einer Navigationsrou- te;
- **Fig. 3**: in einer **Fig. 2** entsprechenden Darstellung und Ansicht die Kartendarstellung gemäß **Fig. 2** mit symbolisierter Nutzerbetätigung am Ort eines Informationsobjekts;
- **Fig. 4**: einen Bildschirmdialog mit Informationen über das ge- mäß **Fig. 3** vom Nutzer ausgewählte Informationsobjekt;
- **Fig. 5**: eine mit der Kartenansicht gemäß Fig. 1 übereinstim- mende Kartenansicht, mit symbolisierter Nutzerbetäti- gung am Ort eines Informationssubjekts;
- **Fig. 6**: einen von der erfindungsgemäßen Navigationseinrichtung infolge Nutzerbetätigung ausgegebenen Bildschirmdialog mit einer Liste der innerhalb eines Suchgebiets um die vom Nutzer ausgewählte Kartenkoordinate enthaltenen Informationsobjekte;
- **Fig. 7**: einen von der Navigationseinrichtung im Anschluss an eine Nutzerauswahl aus dem Dialog gemäß **Fig. 6** ausge- gebenen weiteren Bildschirmdialog;
- **Fig. 8**: einen alternativen, von der Navigationseinrichtung im Anschluss an eine Nutzerauswahl aus dem Dialog gemäß **Fig. 6** ausgegebenen weiteren Bildschirmdialog;
- **Fig. 9**: eine weitere Kartenansicht in 3D-Perspektive mit einer Navigationsroute sowie mit einem Informationsobjekt, ausgegeben von einer erfindungsgemäßen Navigations- einrichtung;
- **Fig. 10**: eine mit der Kartenansicht gemäß **Fig. 9** übereinstim- mende Kartenansicht, mit symbolisierter Nutzerbetäti- gung am Ort des Informationsobjekts;
- **Fig. 11**: einen Bildschirmdialog mit Informationen über das ge- mäß **Fig. 10** vom Nutzer ausgewählte Informationsobjekt;
- **Fig. 12**: einen alternativen Bildschirmdialog mit Informationen über das gemäß **Fig. 10** vom Nutzer ausgewählte Infor- mationsobjekt;
- **Fig. 13**: einen weiteren alternativen Bildschirmdialog mit Infor- mationen über das gemäß **Fig. 10** vom Nutzer ausgewähl- te Informationsobjekt;
- **Fig. 14**: eine weitere Kartenansicht in 3D-Perspektive mit einer Navigationsroute, ausgegeben von einer erfindungsgemä- ßen Navigationseinrichtung;
- **Fig. 15**: eine mit der Kartenansicht gemäß **Fig. 14** übereinstim- mende Kartenansicht, mit symbolisierter Nutzerbetäti- gung am Ort eines Kartenobjekts bzw. Kartenpolygons;
- **Fig. 16**: einen Bildschirmdialog mit Informationen über das ge- mäß **Fig. 16** vom Nutzer ausgewählte Kartenobjekt;
- **Fig. 17**: in schematischer Darstellung eine Liste möglicher Typen von Informationsobjekten, die auf dem Bildschirm einer Navigationseinrichtung gemäß der vorliegenden Erfin- dung darstellbar sind, sowie zugehörige Objektprioritä- ten;
- **Fig. 18**: in schematischer Darstellung einen Ausschnitt aus einer Liste möglicher Aktionen, welche einem Informationsob- jekt kontextabhängig zugeordnet werden können; und
- **Fig. 19**: Kartenansichten zur Auswahl von Objekten sowie Bild- schirmdialog nach der Objektauswahl bei einer Navigati- onseinrichtung gemäß dem Stand der Technik.

In den dargestellten Figuren werden konkrete Anwendungsfälle von Ausführungsformen des erfindungsgemäßen Verfahrens beispielhaft illustriert. Die Erfindung soll dabei jedoch nicht auf die nur beispielhaft gezeigten Informationsobjekte bzw. Aktionen beschränkt sein.

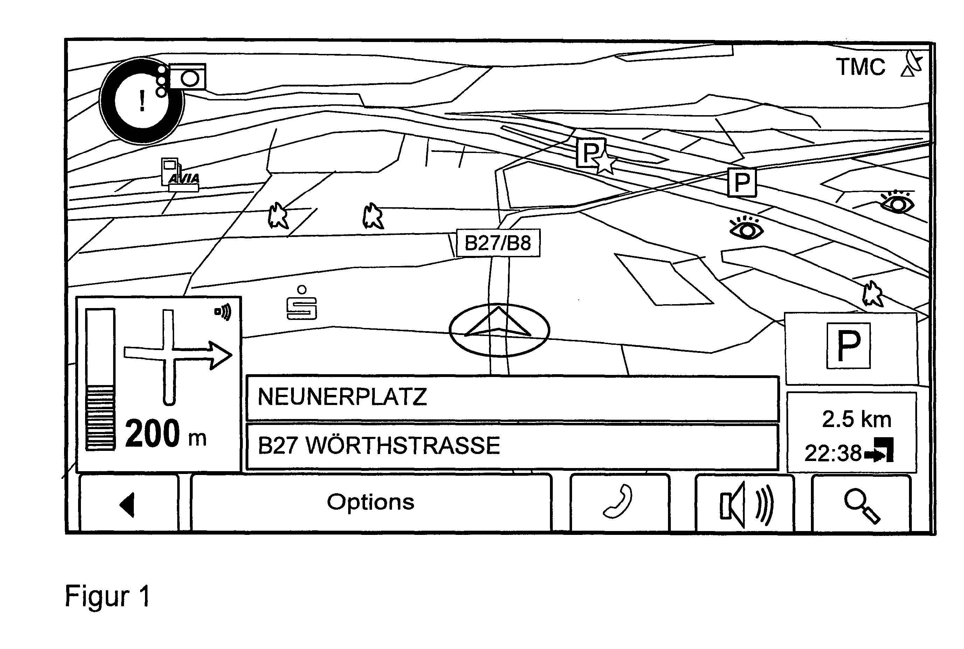

**Fig. 1** zeigt in einer 3D-perspektivischen Darstellung eine Kartenansicht mit Straßen, diversen Informationsobjekten bzw. -Icons sowie mit einer Navigationsroute. Ein Nutzer fährt dabei entlang der Navigationsroute, wobei sich das Navigationsgerät im Modus Kartenansicht gemäß **Fig. 1** befindet. Für die Verwirklichung der Erfindung ist es jedoch prinzipiell unerheblich, welcher Kartenansichtsmodus vom Navigationsgerät angezeigt wird bzw. ob aktuell eine Navigationsfunktion verwendet wird oder nicht.

Möchte der Nutzer nun Details über ein Objekt oder über mehrere Objekte erhalten, die aktuell in der Kartenansicht dargestellt sind, so berührt er bzw. drückt mit dem Finger auf die jeweils entsprechende Stelle in der Karte.

Daraufhin werden die geklickten Bildschirmkoordinaten vom System kontextbezogen auf geographische Koordinaten umgerechnet, und es wird dem Nutzer eine Liste möglicher Aktionen bzw. eine einzelne Aktion dargeboten wie im Folgenden ausgeführt.

### Beispiel 1: Information über Ortschaft

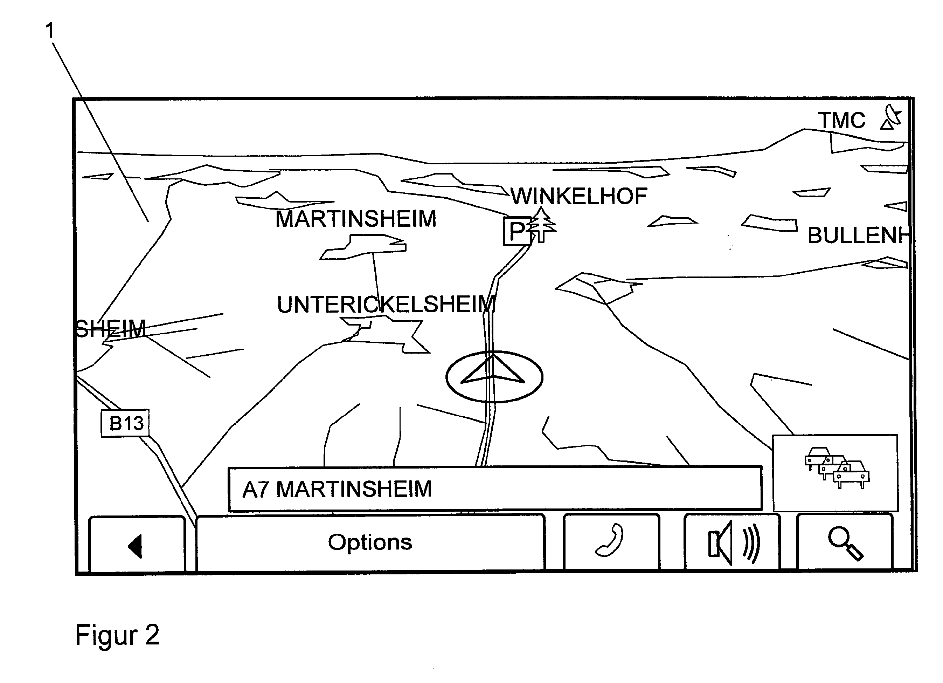

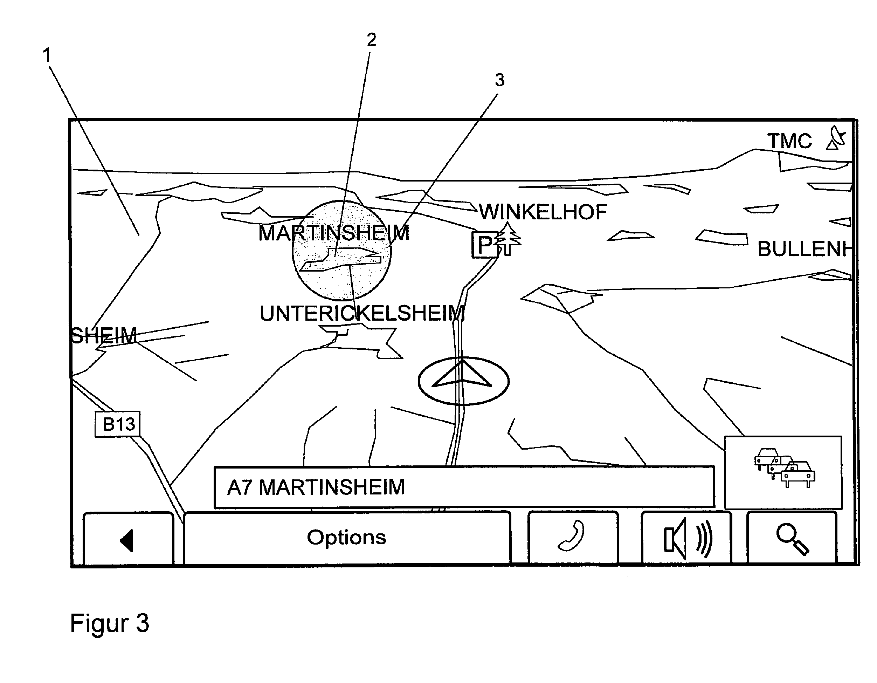

Der Nutzer befährt eine Navigationsroute, wobei er die gemäß **Fig. 2** abgebildete Bildschirmdarstellung erhält. Sodann berührt der Nutzer während der Navigation in der Kartenansicht den Bereich 2 in der Karte 1 gemäß **Fig. 3**. Vom System wird daraufhin der Umkreis 3 (in **Fig. 3** lediglich symbolisch dargestellt) als Suchgebiet definiert, und es wird eine Suche in Bezug auf die im Suchgebiet 3 etwa enthaltenen Kartenobjekte durchgeführt. Optional erfolgt eine kontextbezogene Filterung, und es wird im vorliegenden Fall gemäß **Fig. 3** das Gemeindezentrum "Martinsheim" als Selektionskandidat identifiziert.

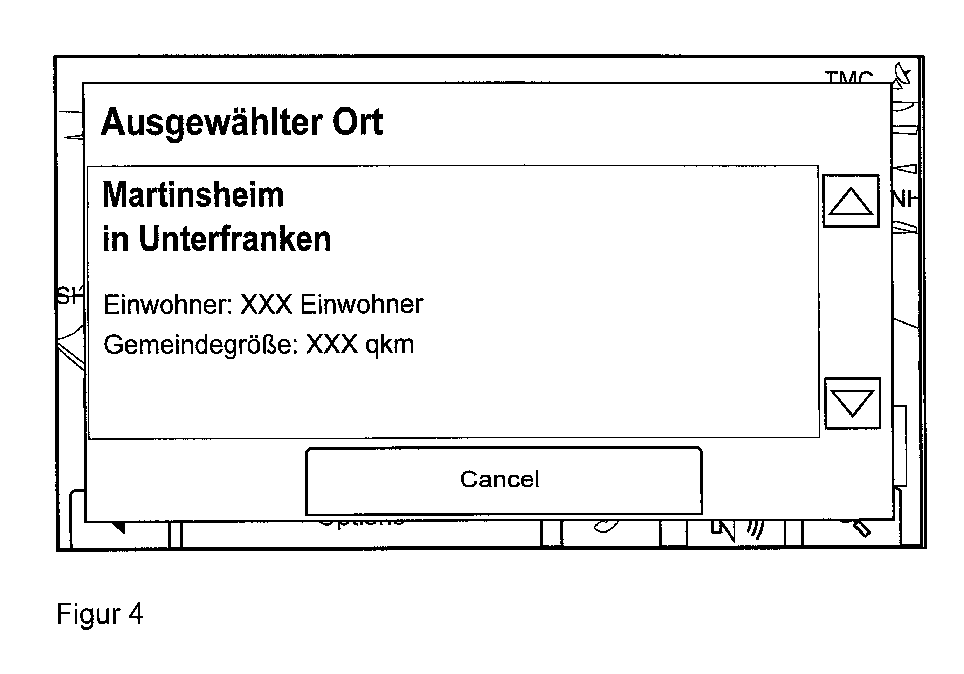

Im Anschluss an die Selektion und die Identifikation des Selektionskandidaten wird dem Nutzer das in **Fig. 4** dargestellte Dialogfeld präsentiert. In diesem Fall enthält das Dialogfeld detaillierte Informationen über die vom Nutzer ausgewählte Ortschaft. Die einzige mit dem ausgewählten Objekttyp in diesem Kontext verbundene Aktion ist die Ausgabe dieser Information, weshalb das Dialogfeld lediglich die Nutzeraktion "Abbrechen" bzw. "Schließen" anbietet.

Bei diesem Beispiel werden dem Nutzer direkt nach dem Bildschirmklick auf die Ortschaft die Detailinformationen zu der gewählten Ortschaft angezeigt. Der Nutzer kann an dieser Stelle nur abbrechen bzw. das Dialogfeld schließen, denn an dieser Stelle ist die Identifikation der gewählten Ortschaft als Navigationsziel nicht sinnvoll, da der Nutzer keine spezifische Straße ausgewählt hat. Die Auswahl einer Straße war an dieser Stelle nicht möglich, da im aktuellen Kartenbild keine Straße zu der fraglichen Ortschaft sichtbar war. Eine Anfahrt lediglich zum Ortsmittelpunkt wurde vom System als nicht sinnvoll eingeordnet, weshalb somit nur die Möglichkeit angeboten und ausgewählt wurde, die Detailinformationen gemäß **Fig. 4** über die selektierte Ortschaft abzurufen.

### Beispiel 2: Auswahl eines Points of Interest in einer Stadt

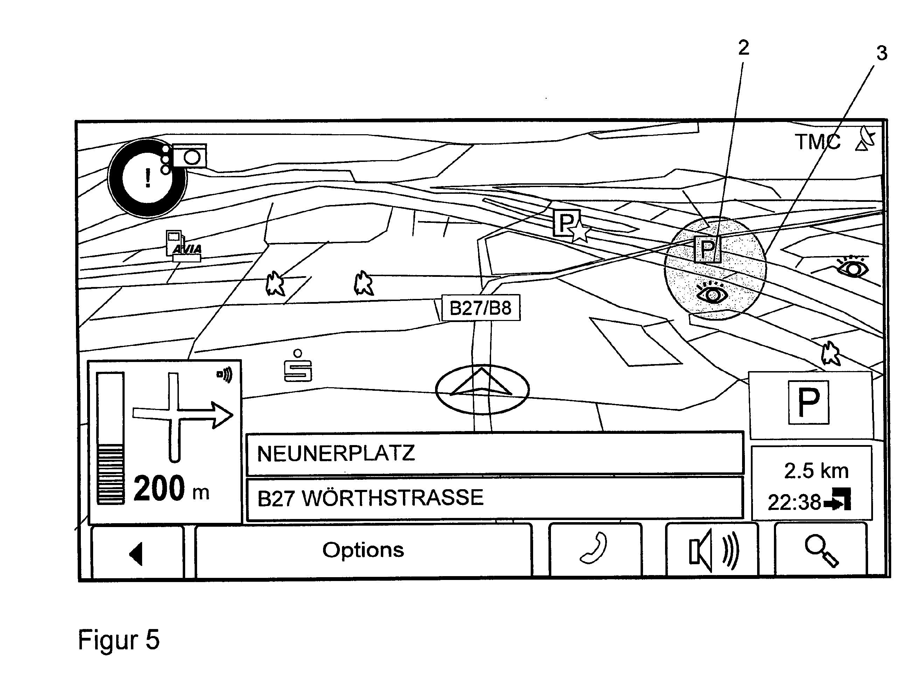

Gemäß **Fig. 5** befindet sich der Nutzer in aktiver Navigation durch ein Stadtgebiet und berührt dabei gemäß **Fig. 5** im Bildschirm den mit einem Kreis 3 lediglich symbolisch markierten Bereich der beiden Informationsicons 2.

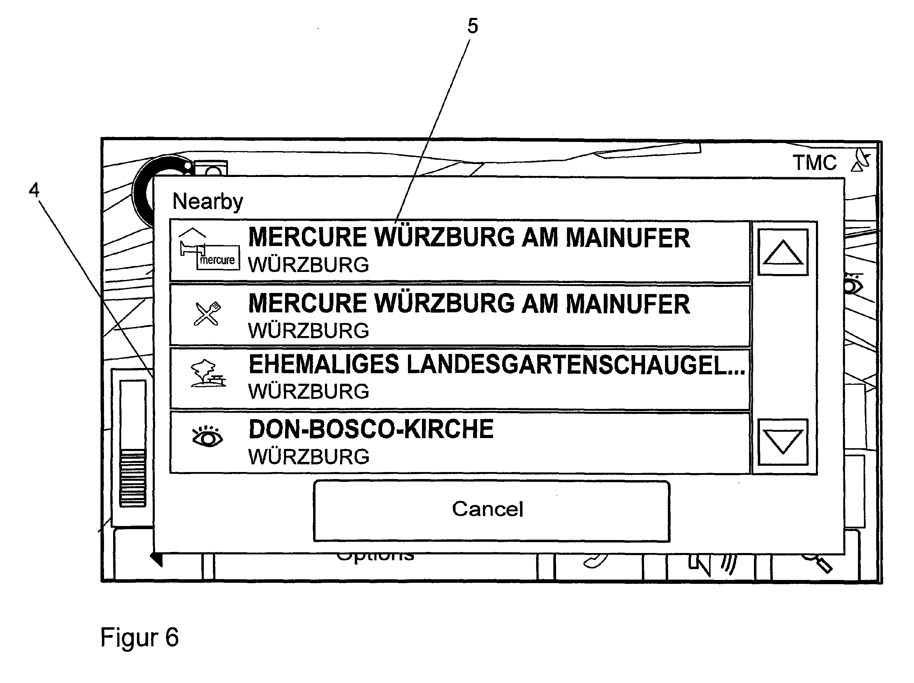

Bei diesem Beispiel ist für das System nicht eindeutig erkennbar, welches Objekt der Nutzer zu klicken versucht hat. Daher wird dem Nutzer nun gemäß **Fig. 6** zunächst ein Bildschirm mit einer Liste 4 angezeigt, in welcher diejenigen Informationsobjekte 2 benannt sind, die in dem ermittelten Suchbereich 3 gemäß **Fig. 5** enthalten sind. Der Nutzer hat daher nun die Möglichkeit, entweder die Auswahl abzubrechen oder aber detaillierte Informationen zu einem bestimmten Informationsobjekt im Suchbereich 3 aufzurufen.

Im dargestellten Beispiel entscheidet sich der Nutzer für einen bestimmten Point of Interest. In diesem Falle handelt es sich dabei um den POI 5, d.h. das Mercure Hotel.

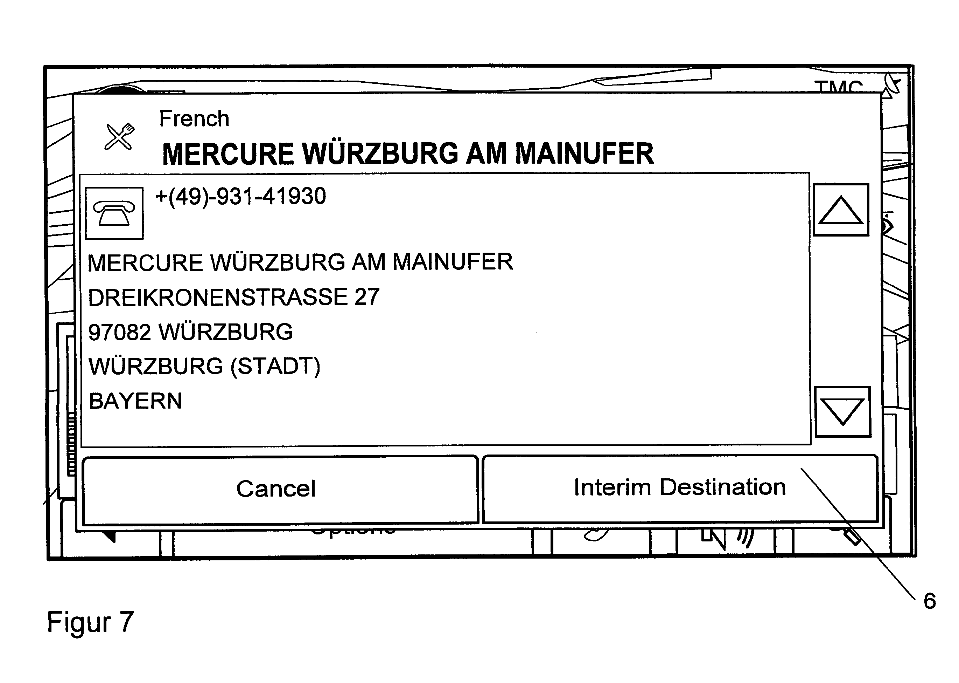

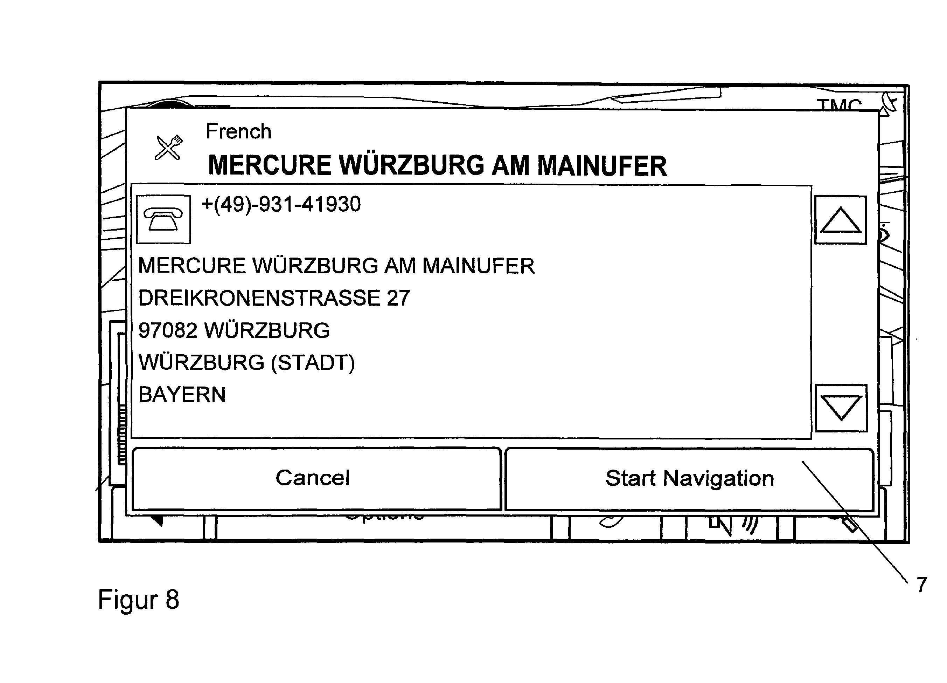

Daraufhin erhält der Nutzer im folgenden Bildschirm gemäß **Fig. 7** Informationen über den gewählten Point of Interest. Dort hat der Nutzer nun die Möglichkeit, den zuvor gewählten Point of Interest durch Klick auf die Schaltfläche 6 als Zwischenziel auszuwählen. Wäre der User zuvor jedoch nicht gemäß **Fig. 5** in einer aktiven Navigation gefahren, sondern lediglich in einer Kartenansicht ohne Verfolgung einer Navigationsroute, so wäre dem User nach der Auswahl des Points of Interest gemäß **Fig. 7** stattdessen das Dialogfeld gemäß **Fig. 8** präsentiert worden. Mit anderen Worten, es wäre dem User stattdessen kontextsensitiv die Option 7 "Start Navigation" gemäß **Fig. 8** anstatt der Option 6 "Zwischenziel" gemäß **Fig. 7** angeboten worden.

Bei diesem Beispiel erhält der Nutzer also aufgrund der "Unschärfe" der Bildschirmberührung 3 gemäß **Fig. 5** eine Listenauswahl von für ihn potenziell interessanten Objekten gemäß **Fig. 6** zurück. Die Listenauswahl kann dabei vorgefiltert sein in Bezug auf solche Objekte, die der User in der Karte gesehen hat, die also zum Zeitpunkt der Bildschirmberührung tatsächlich sichtbar waren. Die Auswahl kann jedoch auch ungefiltert sein, was bedeutet, dass der Nutzer eine Liste aller Informationsobjekte erhält, die in den Massenspeichern des Systems im Bereich der Bildschirmberührung zur Verfügung stehen. Hierunter können beispielsweise auch Informationen über einen gespeicherten Favoriten fallen, welcher zum Zeitpunkt der Bildschirmberührung gemäß **Fig. 5** nicht sichtbar war, unabhängig davon, aus welchem Grund der fragliche Favorit bzw. generell das fragliche Informationsobjekt nicht sichtbar war.

So ist es beispielsweise auch vorstellbar, dass ein Point of Interest, welcher im Terrain View auf der Kartenansicht selbst aktuell nicht dargestellt wird, weil er hinter einer topographischen Erhebung liegt und somit für den Nutzer nicht sichtbar ist, dennoch bewusst in der Auswahlliste 4 gezeigt wird bzw. lediglich aufgrund eines weiteren Kontextfilters, nicht jedoch wegen der momentanen Unsichtbarkeit, nicht gezeigt wird.

### Beispiel 3: Stau auf der Route

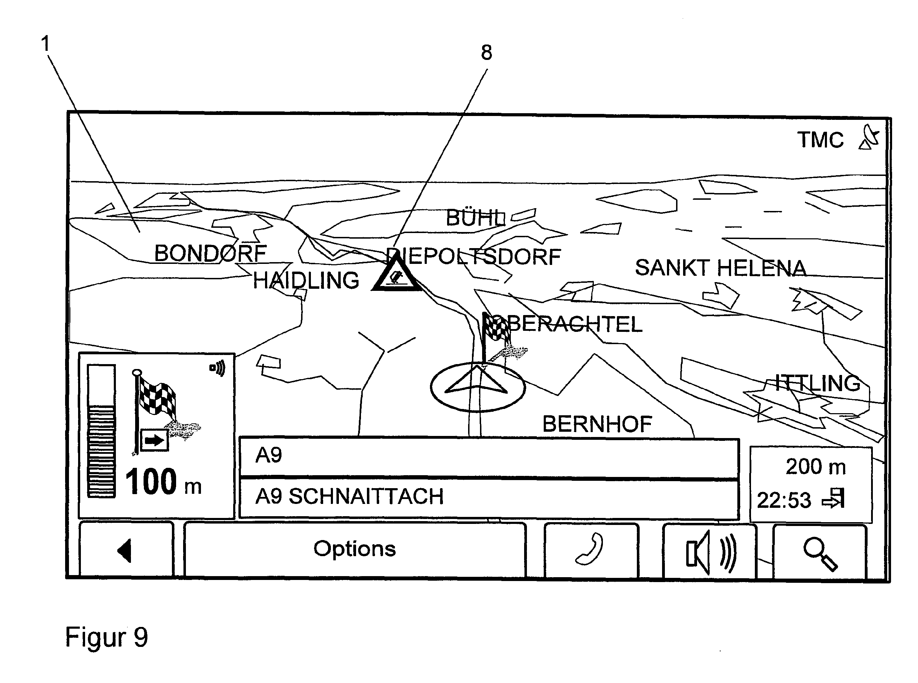

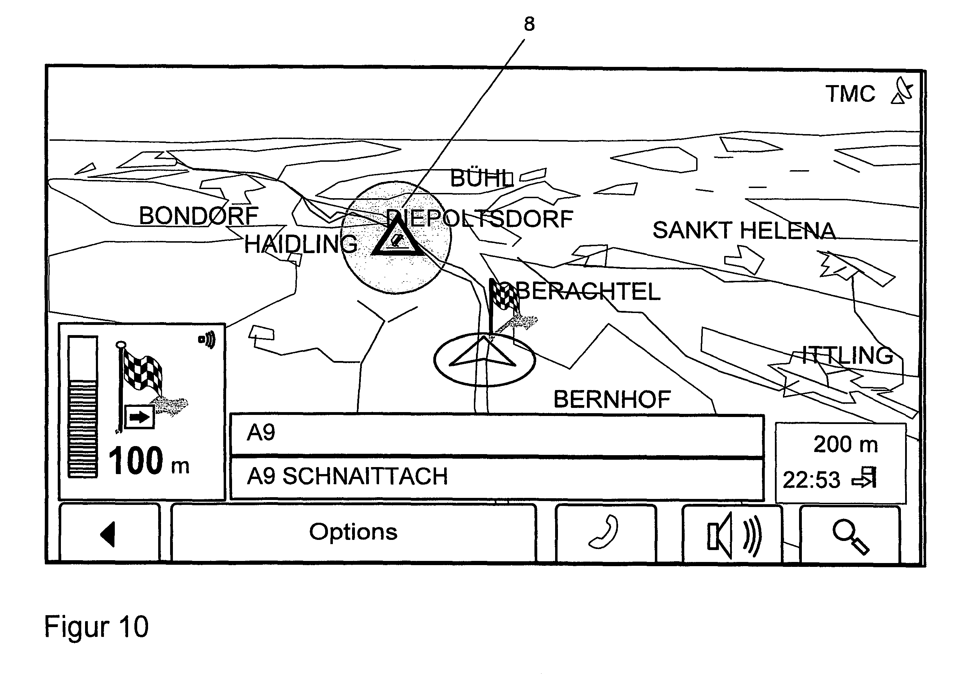

Gemäß **Fig. 9** befindet sich der Nutzer in aktiver Navigation auf einer Route. Dabei wird dem Nutzer gemäß **Fig. 9** eine durch das Symbol 8 gekennzeichnete Staumeldung auf der Karte 1 dargestellt. Der Nutzer berührt daraufhin gemäß **Fig. 10** im Bildschirm das Stausymbol 8.

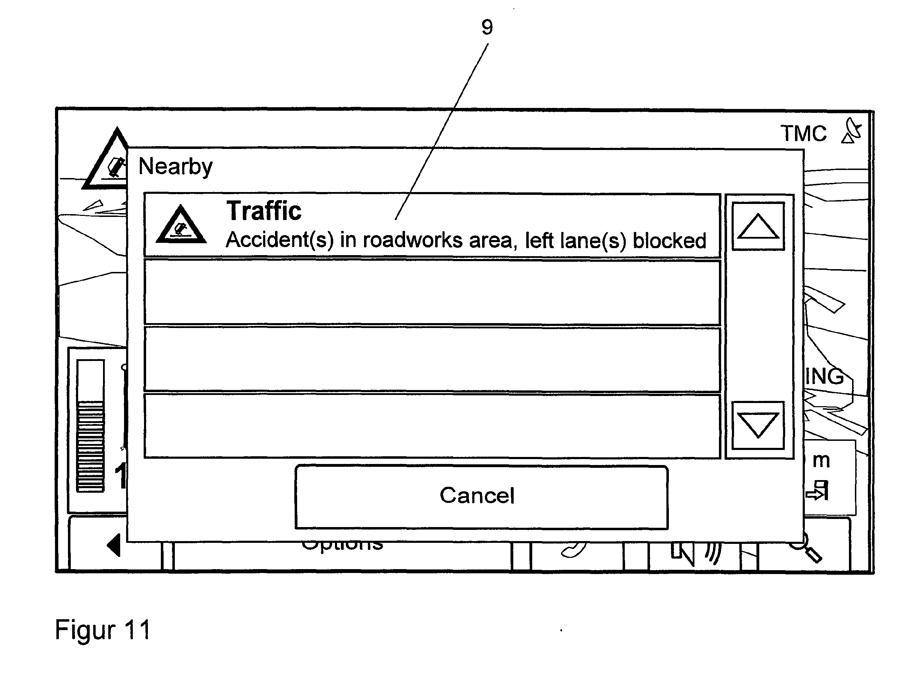

Der Nutzer bekommt bei einer Ausführungsform eines erfindungsgemäßen Verfahrens nun gemäß **Fig. 11** eine Auswahlliste angezeigt, welche jedoch nur einen Eintrag enthält, und zwar den vom Nutzer gewählten Stau 8 mit den zugehörigen Detailangaben 9.

Dem Nutzer wird in diesem Beispiel also lediglich das am höchsten priorisierte Objekt im Suchbereich bzw. in dessen Nähe bei 8 angezeigt. Wäre auf der Route bei 8 hingegen kein Stausymbol angezeigt worden, so wäre im Fall der Bildschirmberührung durch den Nutzer bei 8 gemäß **Fig. 10** höchstwahrscheinlich die Ortschaft "Haidling" im Dialogfeld gemäß **Fig. 11** mit detaillierter Ortsinformation angeboten worden. Stattdessen wurde jedoch aufgrund der in Abhängigkeit von den aktuell angezeigten Objekten kontextsensitiven Filterung der anzuzeigenden Auswahl sowie aufgrund der den Informationsobjekten jeweils zugeordneten Prioritäten lediglich die hier am höchsten priorisierte bzw. mit einer Force-Priorität versehene Staumeldung angezeigt.

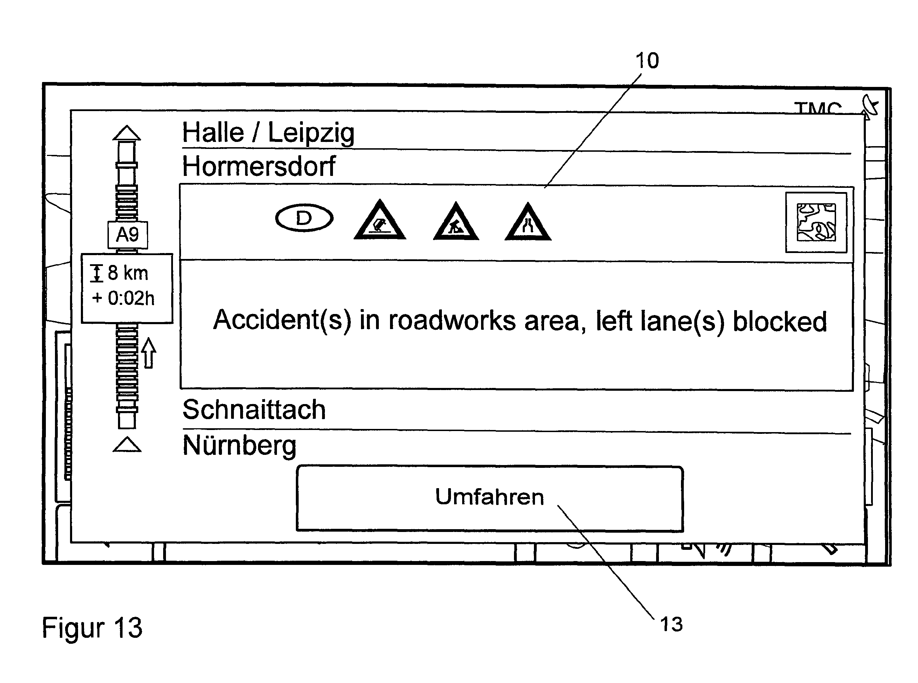

Bei einer anderen Ausführungsform des erfindungsgemäßen Verfahrens analysiert das System nach der Anwahl des Stausymbols 8 durch den Nutzer gemäß **Fig. 10** zunächst, ob der angewählte Stau 8 in Fahrtrichtung auf der Route oder beispielsweise in Gegenfahrtrichtung liegt. Denn in letzterem Fall hätte der Stau 8 keinen Einfluss auf die vom Nutzer momentan befahrene Route. Das System entscheidet somit in Abhängigkeit insbesondere der Fahrtrichtung des Nutzers, ob die Staumeldung 10 mit entsprechenden Aktionsoptionen 11 bzw. 12 (Stau umfahren bzw. Staumeldung ignorieren) angezeigt wird, oder ob lediglich ein Dialogfeld mit Detailinformationen 10 über den Stau 8 gemäß **Fig. 13** angezeigt wird, dessen einzige Aktionsoption im Abbrechen bzw. Schließen 13 des Dialogfelds 10 gemäß **Fig. 13** besteht.

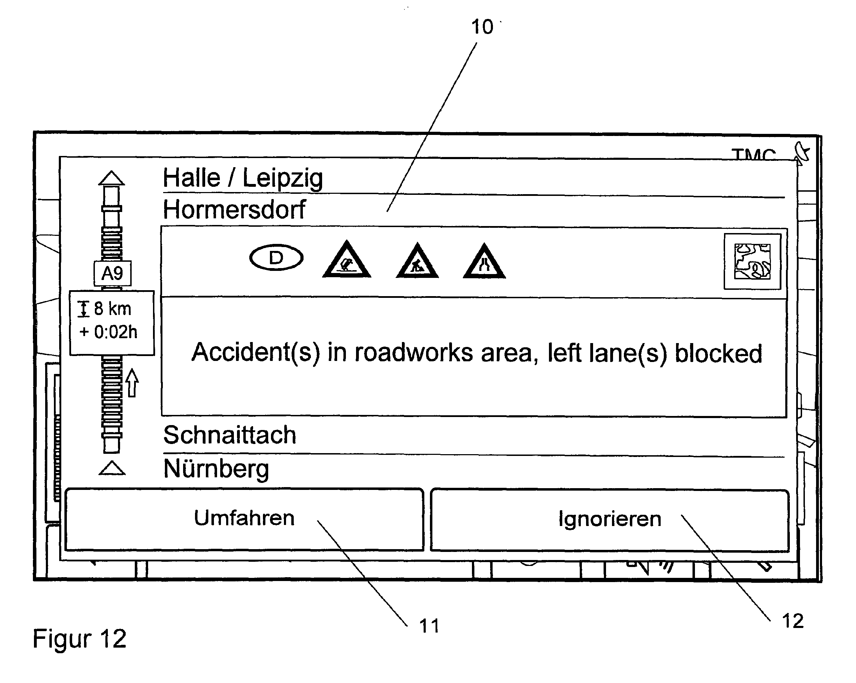

Befindet sich demzufolge der Stau in Fahrtrichtung auf der Route gemäß **Fig. 10**, so ist es sinnvoll, dass der Nutzer die Routenplanung direkt beeinflussen kann. Daher wird dem Nutzer im Dialogfeld 10 gemäß **Fig. 12** die Auswahl angeboten, ob er den Stau umfahren oder ignorieren möchte. Der Nutzer kann nun gemäß **Fig. 12** die Schaltfläche 11 für eine Umfahrung des Staus oder die Schaltfläche 12 wählen, um so die Meldung zu ignorieren. Betätigt der Nutzer die Schaltfläche 11, so erfolgt eine sofortige Neuberechnung der Route, und der Stau kann umfahren werden.

Befindet sich der Stau auf der Route gemäß **Fig. 10** jedoch entgegen der Fahrtrichtung des Nutzers, so besteht keine Notwendigkeit, die Routenplanung zu beeinflussen. In diesem Fall wird dem Nutzer somit nur die Detailinformation gemäß **Fig. 13** angezeigt, und es wird ihm nur die Option 13 angeboten, die Detailinformationsanzeige wieder zu verlassen. Weitere Aktionen sind für Staus, die sich nicht auf der Route befinden, sinnvollerweise nicht vorgesehen und werden daher auch nicht angeboten.

Eine weitere Ausführungsform der Erfindung kann dabei auch vorsehen, dass das Informationsobjekt Stau 8 mit einer weiteren Eigenschaft bzw. Logik verknüpft ist, welche dazu führt, dass dem Nutzer bei Bildschirmberührung im Bereich der Stauanzeige 8 - sofort und ohne Notwendigkeit zu einer weiteren Aktion - die Staumeldung vorgelesen wird.

Bei dem Ausführungsbeispiel gemäß **Fig. 8** bis **10** wurde somit eine Priorisierung bzw. Filterung der auf der Karte sichtbaren Objekte durchgeführt, und es wurde dem Nutzer nach der Bildschirmberührung im Bereich des Staus 8 lediglich das wichtigste in der Nähe befindliche Objekt (= das Objekt mit der höchsten hinterlegten Priorität) angezeigt, wobei es sich vorliegend um die dem Stau zugeordnete Verkehrsmeldung handelt.

Darüber hinaus wurde bei diesem Ausführungsbeispiel bezüglich der Staumeldung berücksichtigt, ob sich der Stau bezüglich der verfolgten Navigationsroute in Fahrtrichtung oder gegen die Fahrtrichtung befindet, und die dem Nutzer angebotenen Optionen wurden in Abhängigkeit davon ausgewählt. Dies bedeutet mit anderen Worten, dass das mit der Verkehrsmeldung verbundene Informationsobjekt 8 entsprechend dem Kontext (hier Kontext "aktive Routenführung") analysiert wurde und das Ergebnis dieser Kontextanalyse dazu herangezogen wurde, welche Folgeaktionen gemäß **Fig. 12** bzw. **13** dem Nutzer angeboten werden und welche nicht.

### Beispiel 4: Polygone auswählen

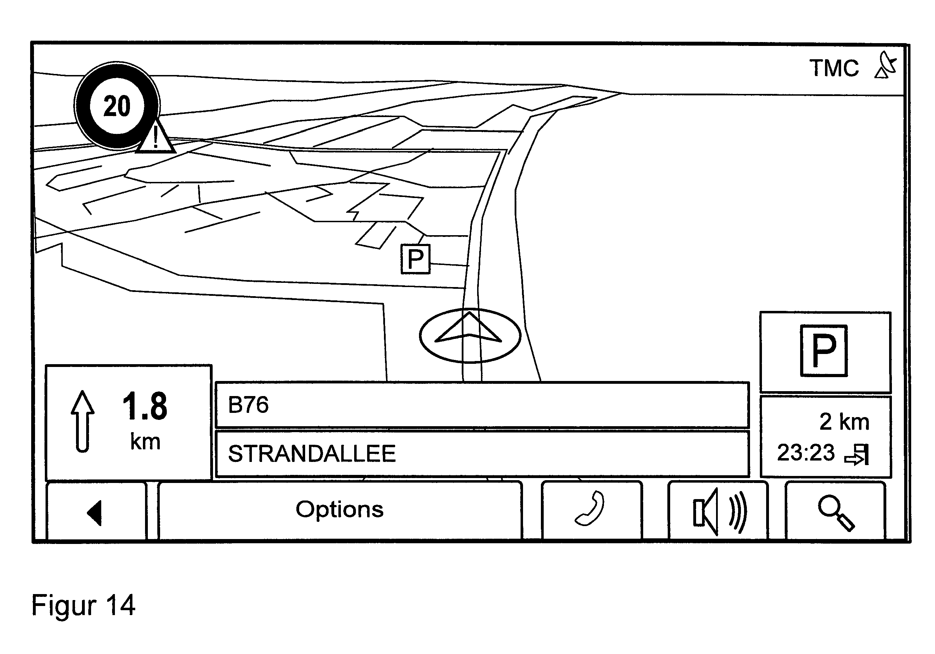

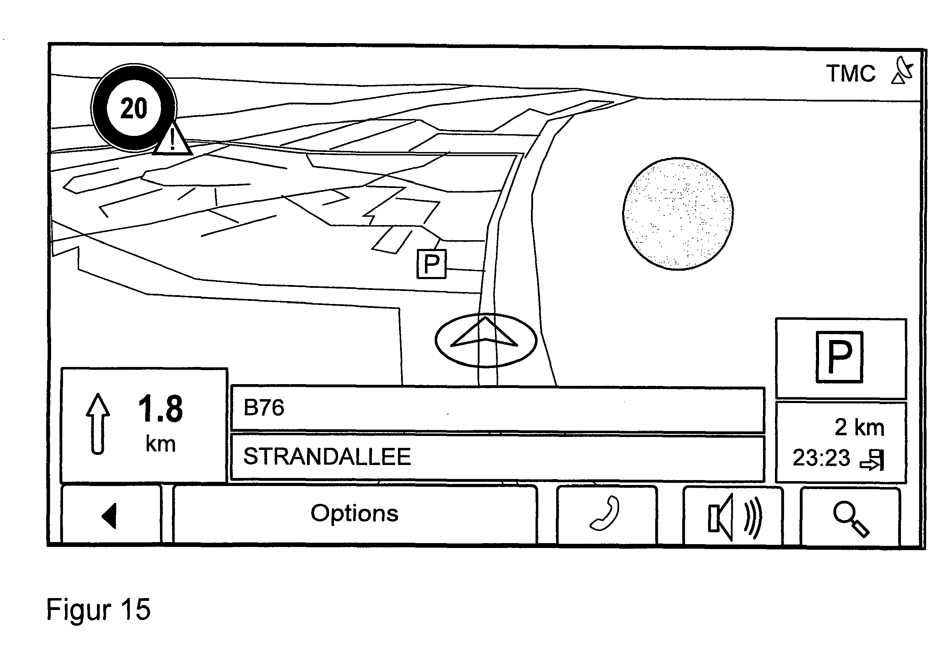

Gemäß **Fig. 14** befindet sich der Nutzer in aktiver Navigation auf einer Route. Der Nutzer drückt gemäß **Fig. 15** nun im Bildschirm auf ein in der Karte erscheinendes Polygon, in diesem Fall auf die in **Fig. 14** rechts dargestellte Wasserfläche.

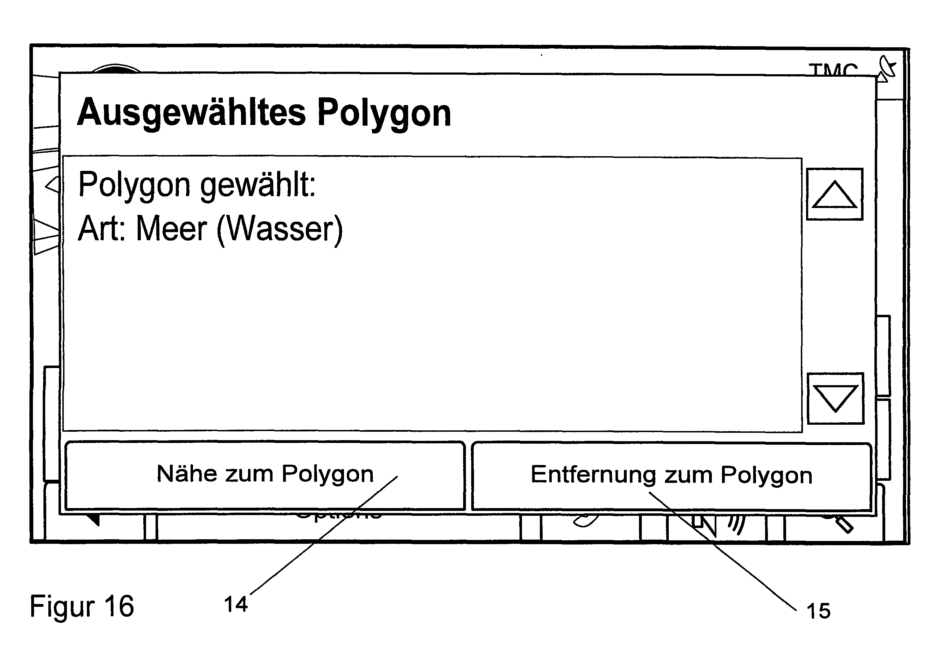

Aufgrund der diesem Polygon zugeordneten Eigenschaften erkennt das System das Polygon als Meer und bietet dem Nutzer daraufhin in einem Dialogfeld gemäß **Fig. 16** die Möglichkeit an, die Route zu beeinflussen.

Der Nutzer kann in diesem Beispiel somit nun entscheiden, ob er seine aktuelle Route beeinflussen bzw. verändern möchte, um seine Route möglichst nahe am Meer (Schaltfläche 14) oder möglichst weit weg vom Meer (Schaltfläche 15) fortzusetzen. Letzteres Verfahren entspricht auch der unveröffentlichten Patentanmeldung DE 10 2007 054 875.5 der Anmelderin.

Die oben beschriebenen Beispiele und Szenarien sind in Bezug auf das Fahren mit oder ohne Navigation, bezüglich Filterung, Priorisierung usw. beliebig untereinander austausch- und miteinander kombinierbar, ohne das Gebiet der Erfindung zu verlassen. Auch die in den Beispielen beschriebenen Verfahrensabläufe können beliebig gegeneinander ausgetauscht und/oder miteinander kombiniert werden. Insbesondere lässt sich jedes der dargestellten erfindungsgemäßen Beispiele auch auf jeden anderen Kartenansichtmodus übertragen. Wahlweise kann jedes einzelne Objekt vom Nutzer auch stets unmittelbar geöffnet werden, ebenso wie über die Auswahlliste.

Schließlich sind zudem prinzipiell auch sämtliche Arten von Informationsobjekten in einer einzigen angezeigten Auswahlliste kombinierbar. Dem Nutzer können in Abhängigkeit der Priorisierung der einzelnen Informationsobjekte somit durchaus beispielsweise Points of Interest, Favoriten, Polygone oder Staumeldungen kombiniert in einer einzigen Liste präsentiert werden.

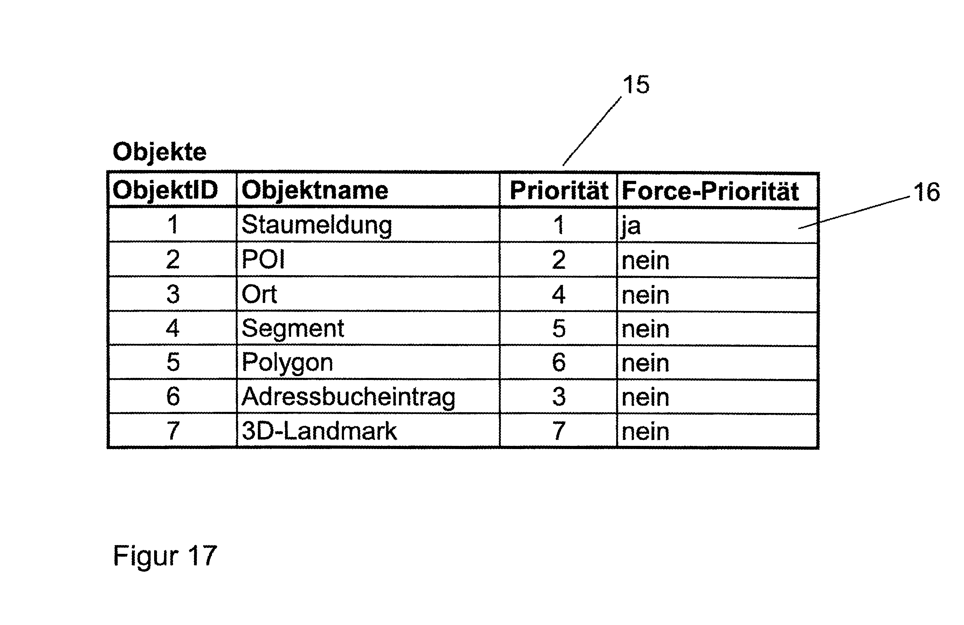

**Fig. 17** zeigt in einer schematischen Darstellung eine Liste möglicher Typen von Informationsobjekten, die auf dem Bildschirm einer Navigationseinrichtung gemäß einer Ausführungsform der vorliegenden Erfindung darstellbar sind. Ferner dargestellt sind in **Fig. 17** die den einzelnen Objekten zugeordneten Prioritäten 15 sowie eine den Objekten etwa zugeordnete Force-Priorität 16. Im Einzelnen handelt es sich dabei um
1. Staumeldungen, die über TMC oder GPRS auf das Navigationsgerät übertragen werden;
2. Points of Interest, die insbesondere im Kartenmaterial hinterlegt sein können;
3. Ortschaften bzw. Ortsmittelpunkte
4. Straßensegmente
5. Polygone wie beispielsweise Meer oder Landnutzungen (Parks, Wälder etc.), Gewerbegebiete usw.;
6. vom Nutzer eingegebene und gespeicherte Favoriten bzw. Adressbucheinträge.
7. 3D-Objekte bzw. Landmarks in der Karte, wobei derartige Zusatzdaten entweder vom Kartenhersteller der Navigationskarten oder auch separat von einem Drittanbieter zur Verfügung gestellt werden können.

In **Fig. 17** wird erkennbar, dass die dargestellte Tabelle eine Spalte 15 enthält, in der angegeben ist, mit welcher Priorität die einzelnen Objekte 1 bis 7 untereinander bevorzugt bzw. priorisiert werden für den Fall, dass vom System im Suchbereich um die Bildschirmberührung des Nutzers mehrere Objekte unterschiedlichen Typs aufgefunden werden. So kann es beispielsweise sinnvoll sein, in einer dem Nutzer präsentierten Auswahlliste lediglich eine Untermenge an Objekten mit den höchsten Prioritäten anzuzeigen. Es wird in einem solchen Fall mit anderen Worten eine Filterung bezüglich der Prioritäten durchgeführt. Alternativ kann auch lediglich eine Sortierung durchgeführt werden, so dass in diesem Fall zwar alle im Suchbereich aufgefundenen Objekte dargestellt werden, jedoch sortiert nach deren Priorität.

In der Spalte 16 ist zudem das Vorhandensein einer sog. Force-Priorität hinterlegt. Im dargestellten Beispiel besitzen lediglich Verkehrsmeldungen eine Force-Priorität. Dies bedeutet bei einer entsprechenden Ausführungsform, dass Verkehrsmeldungen - ohne zusätzliche Auswahl aus einer Liste - dem Nutzer nach einer entsprechenden Bildschirmberührung direkt angezeigt werden, auch dann, wenn sich im Suchbereich etwa weitere Informationsobjekte befinden sollten. Hier besteht zudem die Möglichkeit, die Force-Priorität ebenfalls kontextsensitiv auszugestalten. So kann die Force-Priorität beispielsweise darauf beschränkt sein, lediglich bei aktiver Routenführung berücksichtigt zu werden.

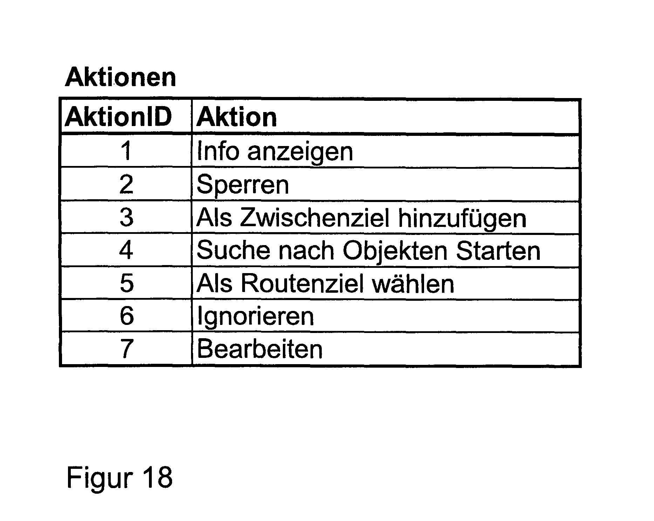

**Fig. 18** zeigt einen Ausschnitt aus einer Liste möglicher Aktionen. Die dargestellten Aktionen können den unterschiedlichen Objekten in weiteren (nicht dargestellten) Zuordnungstabellen zugewiesen werden. So sind für einen Point of Interest primär die Aktionen 1 (Information anzeigen) sowie 3 (Als Zwischenziel hinzufügen) sinnvoll. Zudem können derartige Zuordnungstabellen kontextsensitiv gestaltet werden. Dies bedeutet mit anderen Worten, dass eine Tabelle (ähnlich der in **Fig. 18** dargestellten) vorgehalten wird, die jedoch nur Gültigkeit für den Fall einer aktiven Routenführung besitzt, während eine weitere Tabelle für nicht aktive Routenführung sowie eine dritte Tabelle in Abhängigkeit des Kartenansichtsmodus vorgehalten wird.

So ist beispielsweise die Aktion "Als Zwischenziel hinzufügen" gemäß der Tabelle in **Fig. 18** sinnvoll bei aktiver Routenführung. Bei nicht aktiver Routenführung ist hingegen kontextabhängig die Aktion "Als Routenziel wählen" sinnvoll und damit vorzusehen.

Schließlich sind für Informationsobjekte auch Aktionsketten definierbar. So kann, wie im obigen Beispiel 3 (Stau auf der Route), dem User beispielsweise auch erst ein Dialogfeld mit "Information anzeigen" präsentiert und im Anschluss daran ein weiteres Dialogfeld mit den Optionen "Umfahren" und/oder "Ignorieren" angeboten werden.

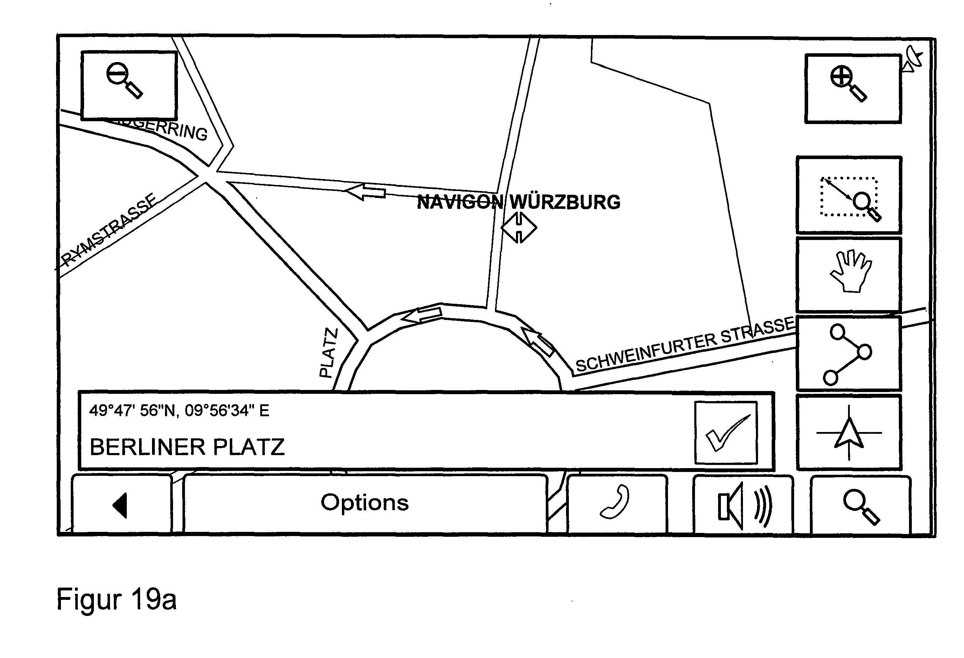

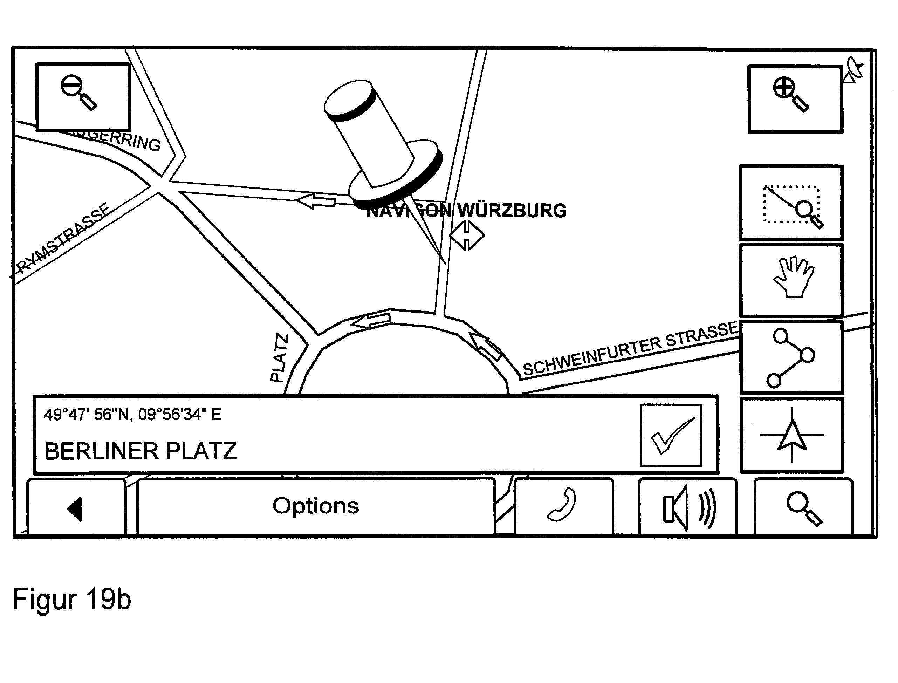

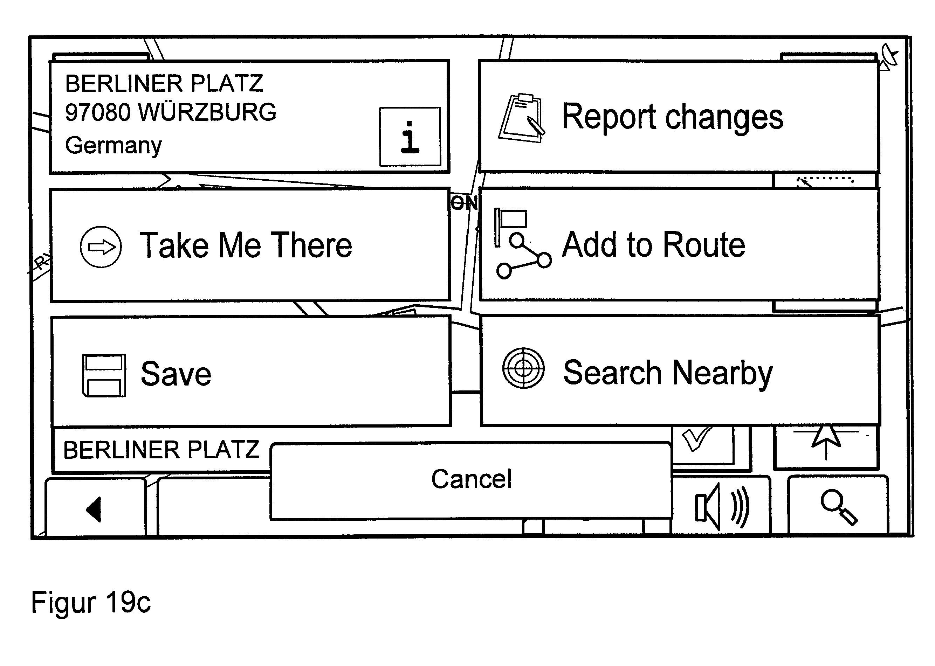

In **Fig. 19** a-c sind nochmals Kartenansichten zur Auswahl von Objekten bzw. ein Bildschirmdialog nach der Objektauswahl dargestellt, wie sie dem Stand der Technik entsprechen. **Fig. 19** a und **Fig. 19** b zeigen dabei zwei im Stand der Technik gebräuchliche Methoden zur Auswahl von Kartenelementen oder Informationsobjekten. Bei der Auswahlmethode gemäß **Fig. 19** a muss vom Nutzer zunächst ein Fadenkreuz mit dem auszuwählenden Objekt in Übereinstimmung gebracht werden, indem entweder das Fadenkreuz oder die Karte so lange verschoben wird, bis Fadenkreuz und auszuwählendes Objekt deckungsgleich sind. In ähnlicher Weise muss der Nutzer bei der Auswahlmethode gemäß **Fig. 19** b entweder die Karte oder den der Karte zur Auswahl überlagerten Pin so lange verschieben, bis Pin und auszuwählendes Kartenobjekt deckungsgleich sind. Im Anschluss daran ist die Auswahl sodann grundsätzlich erst vom Nutzer nochmals zu bestätigen, bevor tatsächlich eine Aktion in Bezug auf das ausgewählte Objekt angeboten werden kann.

Die Aktion besteht bei dem dargestellten Stand der Technik darin, dass dem Nutzer ein nicht kontextsensitives Dialogfeld gemäß **Fig. 19** c präsentiert wird. Sprich, die einzelnen dem Nutzer angebotenen Auswahlpunkte in dem Dialogfeld gemäß **Fig. 19** c sind beim Stand der Technik weitestgehend unabhängig von der Art des ausgewählten Objekts, weshalb das Dialogfeld zumeist zu viele Optionen enthält, die im aktuellen Benutzungskontext sowie im Kontext des Objekttyps oft wenig relevant sind. Ebenso erfolgt beim Stand der Technik keine Sortierung bzw. Priorisierung der dem Nutzer in dem Dialogfeld gemäß **Fig. 19** c angegebenen Auswahlmöglichkeiten.

Man erkennt, dass die im Stand der Technik vorhandenen Einschränkungen und Nachteile dazu führen, dass die Auswahl eines Informationsobjekts und die rasche Auswahl bzw. Ausführung einer für das ausgewählte Objekt geeigneten Aktion dem Nutzer eine Vielzahl an komplizierten Schritten abfordert - eine Problematik, der sich die vorliegende Erfindung erschöpfend angenommen hat und die durch die vorliegende Erfindung mit großem Vorteil im Sinne des Nutzers gelöst wird.

## Patentansprüche

1. Verfahren zum Betrieb einer Navigationseinrichtung, die Navigationseinrichtung umfassend eine Prozessoreinheit, eine Positionsermittlungseinheit, eine Massenspeichereinheit mit Kartendatenbank sowie einen berührungssensitiven Ausgabebildschirm, wobei in der Kartendatenbank oder in der Massenspeichereinheit Informationsobjekte (2) enthalten sind, die zusammen mit einer Kartendarstellung (1) auf dem Ausgabebildschirm darstellbar sind,
**dadurch gekennzeichnet,**
**dass** bei einer Berührung des Ausgabebildschirms innerhalb eines vorgebbaren Distanzbereichs (3) zwischen dem Berührungsmittelpunkt und zumindest einem Informationsobjekt (2) eine Auswahl des zumindest einen Informationsobjekts (2) erfolgt und zumindest eine vordefinierte Aktion ausgeführt wird, wobei die vordefinierte Aktion in Abhängigkeit zumindest einer Eigenschaft des zumindest einen Informationsobjekts (2) automatisch aus einer Menge von Aktionen ausgewählt wird.

2. Verfahren nach Anspruch 1,
**dadurch gekennzeichnet,**
**dass** bei einer Berührung des Ausgabebildschirms die Selektierung eines Informationsobjekts (2) und die Ausführung einer vordefinierten Aktion nur dann erfolgt, wenn das Informationsobjekt (2) aktuell auf dem Bildschirm dargestellt ist.

3. Verfahren nach Anspruch 1 oder 2,
**dadurch gekennzeichnet,**
**dass** bei einer Berührung des Ausgabebildschirms dem Berührungsmittelpunkt eine Bildschirm-Koordinate und der Bildschirm-Koordinate eine geographische Kartenkoordinate zugeordnet wird, wobei um die geographische Kartenkoordinate ein geographisches Suchgebiet (3) mit einer vorgebbaren Ausdehnung definiert wird, und wobei alle Informationsobjekte (2) innerhalb des Suchgebiets (3) als Selektionskandidaten ermittelt werden.

4. Verfahren nach Anspruch 3,
**dadurch gekennzeichnet,**
**dass** das Suchgebiet (3) durch einen Kreis mit einem vorgebbaren Radius gebildet ist.

5. Verfahren nach Anspruch 3 oder 4,
**dadurch gekennzeichnet,**
**dass** das Suchgebiet (3) zumindest einmal automatisch vergrößert wird, falls bei der ersten Suche innerhalb des Suchgebiets (3) keine Selektionskandidaten (2) ermittelt werden.

6. Verfahren nach einem der Ansprüche 1 bis 5,
**dadurch gekennzeichnet,**
**dass** die vordefinierte Aktion die Bildschirmanzeige einer Auswahlliste (4) der Selektionskandidaten (2) umfasst, falls mehrere Selektionskandidaten (2) ermittelt wurden.

7. Verfahren nach einem der Ansprüche 1 bis 6,
**dadurch gekennzeichnet,**
**dass** eine erste Filterung der ermittelten Selektionskandidaten (2) danach erfolgt, ob sie aktuell auf dem Bildschirm dargestellt bzw. sichtbar sind.

8. Verfahren nach einem der Ansprüche 1 bis 7,
**dadurch gekennzeichnet,**
**dass** die vordefinierte Aktion für den Fall, dass eine Mehrzahl von Selektionskandidaten (2) genau einen Selektionskandidaten (2) umfasst, der eine Vorrangeigenschaft aufweist, die automatische Auswahl dieses Selektionskandidaten (2) umfasst, wobei insbesondere die Vorrangeigenschaft vom aktuellen Benutzungskontext abhängig ist.

9. Verfahren nach einem der Ansprüche 1 bis 8,
**dadurch gekennzeichnet,**
**dass** für den Fall, dass genau ein Selektionskandidat (2) ermittelt wurde, eine automatische Auswahl dieses Selektionskandidaten (2) erfolgt, oder für den Fall, dass einem selektierten Informationsobjekt (2) nur eine Aktion zugeordnet ist, diese Aktion automatisch ausgeführt wird

10. Verfahren nach einem der Ansprüche 1 bis 9,
**dadurch gekennzeichnet,**
**dass** die vordefinierte Aktion die Bildschirmanzeige einer Auswahlliste von möglichen Nutzeraktionen umfasst, die dem selektierten Informationsobjekt (2) abhängig von dessen Eigenschaften zugeordnet sind.

11. Verfahren nach einem der Ansprüche 1 bis 10,
**dadurch gekennzeichnet,**
**dass** die vordefinierte Aktion bzw. eine Bildschirmanzeige einer Auswahlliste von möglichen Nutzeraktionen dem selektierten Informationsobjekt (2) abhängig von einem aktuellen Benutzungskontext zugeordnet sind.

12. Verfahren nach einem der Ansprüche 1 bis 11,
**dadurch gekennzeichnet,**
**dass** bei Berührung des Ausgabebildschirms innerhalb des vorgegebenen Distanzbereichs (3) zwischen dem Berührungsmittelpunkt und zumindest einem Informationsobjekt (2) vordefinierte Bewegungsmuster, insbesondere Gesten, detektiert werden können, wobei eine Aktion in Abhängigkeit zumindest einer Eigenschaft des Bewegungsmusters ausgewählt wird.

13. Verfahren nach einem der Ansprüche 1 bis 12,
**dadurch gekennzeichnet,**
**dass** die Navigationseinrichtung mit einer Näherungssensorik ausgestattet ist, mit der die Annäherung eines Bedienelements an den Ausgabebildschirms detektiert werden kann, wobei nach Detektion der Annäherung des Bedienelements an den Ausgabebildschirm veränderte Bildinhalte am Ausgabebildschirm angezeigt werden.

14. Computerprogrammprodukt mit auf einem maschinenlesbaren Träger gespeicherten Programmschritten zur Durchführung eines Verfahrens gemäß einem der Ansprüche 1 bis 13, wenn die Programmschritte von einer programmierbaren Prozessoreinrichtung ausgeführt werden.

15. Digitales Speichermedium mit elektronisch auslesbaren Steuersignalen, die mit einer programmierbaren Prozessoreinrichtung dergestalt zusammenwirken können, dass ein Verfahren gemäß einem der Ansprüche 1 bis 13 ausgeführt wird.

16. Navigationseinrichtung zur Erstellung und Handhabung einer geographischen Kartenansicht, die Navigationseinrichtung umfassend eine Prozessoreinheit, eine Positionsermittlungseinheit, eine Massenspeichereinheit mit Kartendatenbank sowie einen berührungssensitiven Ausgabebildschirm, wobei auf dem Ausgabebildschirm Informationsobjekte (2) zusammen mit einer Kartendarstellung (1) darstellbar sind, und wobei die Prozessoreinheit zum Ausführen eines Computerprogrammprodukts nach Anspruch 14, zum Auslesen eines Speichermediums nach Anspruch 15 oder zur Durchführung eines Verfahrens gemäß einem der Ansprüche 1 bis 13 eingerichtet ist.
